Europäisches Patentamt

European Patent Office

Office européen des brevets

(19)

(11) Veröffentlichungsnummer: **0 360 114 B1**

(12) # EUROPÄISCHE PATENTSCHRIFT

(45) Veröffentlichungstag der Patentschrift: **16.12.92**

(51) Int. Cl.⁵: **B29C 47/20**, B29C 47/06, B29C 49/22

(21) Anmeldenummer: **89116748.8**

(22) Anmeldetag: **11.09.89**

(54) **Verfahren und Vorrichtung zum Herstellen von Hohlkörpern aus thermoplastischem Kunststoff.**

(30) Priorität: **20.09.88 DE 3831837**

(43) Veröffentlichungstag der Anmeldung:
**28.03.90 Patentblatt 90/13**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**DE-A- 2 050 563       DE-A- 3 439 285
FR-A- 2 299 957       US-A- 3 457 337
US-A- 3 611 494       US-A- 3 706 827
US-A- 4 208 178**

**PATENT ABSTRACTS OF JAPAN, Band 10,
Nr. 378 (M-546)[2435], 17. Dezember 1986,
Seite 123 M 546; & JP-A-61 171 320 (MAZDA
MOTOR CORP.) 02-08-1986**

**PATENT ABSTRACTS OF JAPAN, Band 10,
Nr. 33 (M-452)[2090], 8. Februar 1986, Seite 24
M 452; & JP-A-60 187 513 (MITSUBISHI JUSHI
K.K.) 25-09-1985**

(73) Patentinhaber: **Krupp Kautex Maschinenbau
GmbH**

**W-5300 Bonn 3(DE)**

(72) Erfinder: **Daubenbüchel, Werner, Dipl.-Ing.
Juckerberg 1
W-5060 Bergisch Gladbach(DE)**
Erfinder: **Eiselen, Otto, Dipl.-Ing.
Am Wiesenplätzchen 8
W-5330 Königswinter 41(DE)**
Erfinder: **Friedrichs, Karsten, Dipl.-Ing.
Kastanienweg 39
W-5340 Bad Honnef(DE)**
Erfinder: **Kiefer, Erich, Dipl.-Ing.
Siebengebirgsstrasse 30
W-5300 Bonn 3(DE)**
Erfinder: **Klüsener, Peter, Dipl.-Ing.
Im Vogelsang 7
W-5300 Bonn 2(DE)**

(74) Vertreter: **Koepsell, Helmut, Dipl.-Ing.
Mittelstrasse 7
W-5000 Köln 1(DE)**

## Beschreibung

Die Erfindung betrifft ein Verfahren und eine Vorrichtung zum Herstellen von Hohlkörpern aus thermoplastischem Kunststoff, deren Wandung aus wenigstens zwei Schichten besteht, mittels Extrusions-Blasformen, wobei zunächst Vorformlinge, die eine entsprechende Anzahl von Schichten. aufweisen, absatzweise hergestellt werden unter Verwendung einer Extrusionseinheit, die wenigstens zwei Extruder und einen gemeinsamen Extrusionskopf aufweist und mit Speicherräumen zum Speichern der in den Extrudern plastifizierten Materialien und mit Mitteln zum Entleeren dieser Speicherräume zur Bildung von Vorformlingen versehen ist, und Materialströme, deren Anzahl der Anzahl der Schichten in der Wandung des Hohlkörpers entspricht, im Extrusionskopf derart zusammengeführt werden, daß einander benachbarte Ströme in einem Laminatbildungsbereich miteinander zu einem Laminat für die Wandung des Vorformlings verbunden werden, welches vom Laminatbildungsbereich durch einen Verbindungskanal innerhalb des Extrusionskopfes zu der in einem Abstand vom Laminatbildungsbereich befindlichen Austrittsöffnung vorbewegt wird, und aus der Austrittsöffnung ein Volumenabschnitt des Laminats zur Bildung des Vorformlings ausgestoßen wird, der zwei Endabschnitte und einen Mittelabschnitt aufweist, von dem zumindest ein Teilbereich innerhalb des Formnestes einer unterteilten Blasform unter innerem Überdruck aufgeweitet wird, und die Endabschnitte des Vorformlings als Überschußmaterial durch einen Abquetschvorgang abgequetscht werden, an welchem Teile der Blasform teilnehmen, und das Überschußmaterial außerhalb des Formnestes verbleibt.

Es ist aus der DE-OS 26 04 247 bekannt, zunächst die einzelnen Materialströme innerhalb des Spritzkopfes in eine im Querschnitt ringförmige Gestalt zu bringen und die Materialströme dann zu dem den Vorformling bildenden Laminat zu formen, bevor dieses durch die Austrittsöffnung den Spritzkopf verläßt. Die Laminatbildung erfolgt während des durch die Kolben bewirkten Ausstoßens der gespeicherten Materialien zur Herstellung eines Vorformlings. Es ist vorteilhaft, die Materialströme sämtlicher Schichten in einem Bereich zusammenzuführen, der in axialer Richtung des Spritzkopfes sehr kurz ist. Ggf. können auch sämtliche Materialströme in einer Ebene, die etwa senkrecht zur Längsachse des Extrusionskopfes verläuft, zur Laminatbildung zusammengeführt werden.

Aufgrund der absatzweisen Bildung des Vorformlings können innerhalb des Extrusionskopfes zwei Betriebsphasen unterschieden werden. Nach Abschluß der Herstellung eines Vorformlings durch Ausstoßen einer entsprechenden Materialmenge durch die Austrittsöffnung des Extrusionskopfes sind die Speicherräume entleert. In der folgenden Betriebsphase werden die Speicherräume mit Material gefüllt, welches von der jeweils zugehörigen Plastifiziereinrichtung, also den bereits erwähnten Schneckenpressen, in den jeweils zugehörigen Speicherraum gefördert wird. Dabei werden die Kolben, die für die Entleerung der Speicherräume benutzt werden, in ihre Ausgangslage zurückbewegt. Während dieser Betriebsphase wird kein Vorformling aus dem Extrusionskopf ausgestoßen, so daß das Material, welches sich im Kanalsystem zwischen den Speicherräumen und der Austrittsöffnung befindet, nicht bewegt wird. Nachdem das Füllen der Speicherräume beendet worden ist, folgt die zweite Betriebsphase, in welcher die Materialien zur Bildung eines Vorformlings aus den Speicherräumen unter Einwirkung der Kolben ausgestoßen und in Richtung auf die Austrittsöffnung verdrängt werden, wobei zugleich in dem Bereich, in dem die Kanäle für die einzelnen Materialien zusammentreffen, das Laminat gebildet wird. Von diesem Laminatbildungsbereich fließt das Material als Laminat durch einen Verbindungskanal in Richtung auf die Austrittsöffnung. Während dieser zweiten Betriebsphase wird der Ausstoßvorgang, durch welchen der Vorformling gebildet wird, ganz überwiegend durch die Verdrängung des Materials aus den Speichern durch die Kolben bewirkt. Hinzu kommt noch ein kleinerer Materialanteil, der bei kontinuierlich laufenden Plastifiziereinrichtungen von diesen während des Ausstoßvorganges in Richtung auf die Austrittsöffnung bewegt wird.

Die diskontinuierliche Herstellung der Vorformlinge hat entsprechend den unterschiedlichen Betriebsphasen unterschiedliche Betriebsbedingungen, insbesondere bezüglich der im Extrusionskopf herrschenden Druckverhältnisse, zur Folge. Diese unterschiedlichen und demzufolge sich ändernden Druckverhältnisse führen dazu, daß am Beginn und/oder am Ende jedes Ausstoßvorganges auch im Laminatbildungsbereich in den einzelnen Materialströmen, aus denen sich das Laminat zusammensetzt, unterschiedliche Druckverhältnisse herrschen, die zu Unregelmäßigkeiten in der Laminatbildung führen. Dies ist z. B. darauf zurückzuführen, daß normalerweise die Volumen der einzelnen Schichten und damit auch der einzelnen Speicher unterschiedlich sind. Da thermoplastische Kunststoffe in plastischem Zustand sich nicht wie eine Flüssigkeit verhalten, sondern innerhalb bestimmter Grenzen eine gewisse elastische Komprimierbarkeit aufweisen, die bei Druckentlastung zu einer Rückstellung, also zu einer Volumenvergrößerung des Kunststoffes führt, muß damit gerechnet werden, daß am Anfang und am Ende jedes Ausstoßvorganges in dem Bereich, in welchem das Laminat sich bildet, durch unterschiedliches Komprimieren und Dekomprimieren in den einzelnen Materialströmen das Laminat unerwünschte Verformungen erfährt, die zu Unregelmäßigkeiten im Laminat, insbesondere bezüglich der räumlichen und quantitativen Verteilung der einzelnen Schichten im Laminat führen. Diese Ungleichmäßigkeiten werden in der ersten Phase des Austoßvorganges auftreten, da sich kurz nach Beginn des Ausstoßvorganges wieder ein Gleichgewicht einstellen wird. Entsprechendes kann auch für die Endphase des Austoßvorganges gelten. Nach Beendigung der Bewegung der den Ausstoßvorgang bewirkenden Kolben treten eine Druckentlastung und ein Dekomprimieren des Materials ein, die in den einzelnen Schichten bzw. in den diese bildenden Strömen aufgrund der unterschiedlichen Volumen unterschiedlich sein werden, so daß auch hier inbesondere im Bereich der Laminatbildungsstelle aufgrund unterschiedlicher Druckverhältnisse in den einzelnen Materialströmen Unregelmäßigkeiten der Verteilung der einzelnen Schichten im Laminat auftreten können. Diese Unregelmäßigkeiten sind bei kontinuierlicher Extrusion der Vorformlinge nicht vorhanden, da keine durch absatzweise Extrusion bewirkten Änderungen der Druckverhältnisse und damit keine dadurch verursachten Ungleichmäßigkeiten im Laminat auftreten.

Die vorbeschriebenen, bei absatzweiser Extrusion unvermeidbaren Unregelmäßigkeiten können zu erheblichen Qualitätsminderungen der aus den Vorformlingen herzustellenden Erzeugnisse dadurch führen, daß deren Wandungen von ungleichmäßiger Beschaffenheit sind. Dabei ist es gleichgültig, wie im einzelnen die Materialströme vor der Laminatbildung im Extrusionskopf geführt werden, da die die Unregelmäßigkeiten bewirkenden Änderungen der Druckverhältnisse in jedem Fall durch den Wechsel zwischen Füllen und Entleeren auftreten, der für die absatzweise Extrusion typisch ist.

Demzufolge liegt der Erfindung unter anderem die Aufgabe zugrunde, Verfahren und Vorrichtung der einleitend beschriebenen Art so auszugestalten, daß eine nachteilige Beeinflussung der Qualität der aus den Vorformlingen hergestellten Hohlkörper nicht eintritt. Dies soll mit einfachen Mitteln auch dann erreichbar sein, wenn die Hohlkörper, wie es im Extrusions-Blasverfahren im allgemeinen üblich ist, in großen Stückzahlen hergestellt werden. Auf jeden Fall soll vermieden werden, daß die Unregelmäßigkeiten, die am Anfang und/oder am Ende des Ausstoßvorganges sich im Laminat bilden können, die Qualität des Enderzeugnisses beeinflussen.

Zur Lösung dieser Aufgabe schlägt die Erfindung vor, daß das Volumen des Verbindungskanals zwischen dem Laminatbildungsbereich und der Austrittsöffnung des Extrusionskopfes so bemessen wird, daß bei einem vorgegebenen Volumen des Vorformlings das Material zur Herstellung des Hohlkörpers nach Bildung des Laminats während der Dauer wenigstens eines Arbeitszyklus' noch im Extrusionskopf verbleibt und ein Bereich gestörten Laminats, der am Ende und/oder am Anfang der Entleerung der Speicherräume nahe dem Laminatbildungsbereich entsteht, sich in wenigstens einem der Volumen-Endabschnitte befindet, die von dem den extrudierten Vorformling bildenden Volumen-Gesamtabschnitt abgequetscht werden und außerhalb des Formnestes der Blasform bleiben, wenn wenigstens ein Teilbereich des zwischen den Volumen-Endabschnitten befindlichen Volumen-Mittelabschnittes im Formnest der Blasform aufgeweitet wird.

Das Verfahren gemäß der Erfindung weist den besonderen Vorteil auf, daß es zur Erzielung des angestrebten Effekts keinerlei zusätzlichen Aufwandes an Kunststoff bedarf. Beim Extrusions-Blasverfahren ist es ohnehin erforderlich, einen Vorformling zu verwenden, der länger ist als der daraus herzustellende Hohlkörper. Das überschüssige Material wird im allgemeinen beim Schließen der geteilten Blasform um den Vorformling durch die zu diesem Zweck mit Abquetschkanten versehene Blasform und/oder im Zusammenwirken zwischen Blasform und Blasdorn abgequetscht, so daß an beiden Enden des Hohlkörpers sich Abschnitte aus Abfall- oder Überschußmaterial befinden, die im allgemeinen über einen dünnen Steg mit dem Hohlkörper verbunden bleiben und von diesem abgetrennt werden. Diese Abfallstücke an beiden Enden des Hohlkörpers weisen verfahrensbedingt eine gewisse Mindestlänge auf, so daß der mit der herstellungsbedingten Unregelmäßigkeit versehene Bereich des Vorformlings ohne Schwierigkeiten auch dann in wenigstens einem dieser Abfallstücke untergebracht werden kann, wenn der Bereich der Unregelmäßigkeit eine gewisse axiale Erstreckung aufweist, also nicht nur auf einen ganz kurzen Bereich beschränkt ist.

Vorteilhaft wird so verfahren, daß das Volumen des Verbindungskanals im Extrusionskopf zwischen dem Laminatbildungsbereich und der Austrittsöffnung

a) nicht kleiner ist als die Summe des Volumens aus dem Volumen-Mittelabschnitt des Vorformlings und dem in Fließrichtung des Materials vorderen Volumen-Endabschnitt, der ohnehin abgequetscht wird, und dem Volumen-Teilabschnitt des gestörten Laminats, der am Ende des Ausstoßhubes entsteht, und

b) nicht größer ist als die Summe des Volumens aus dem einen Vorformling bildenden Volumen-Gesamtabschnitt und dem in Fließrichtung des Materials hinteren Volumen-Endabschnittes, der ohnehin abgequetscht wird, abzüglich des Volumen-Teilabschnittes gestörten Laminats, der am Anfang des Ausstoßhubes entsteht, wobei

c) die Summe der Volumen beider Volumen-Teilabschnitte gestörten Laminats des den Vorformling bildenden Volumen-Gesamtabschnittes nicht größer ist als die Summe der Volumen beider abzuquetschenden Volumen-Endabschnitte des Vorformlings.

Dabei kann so vorgegangen werden, daß das Volumen des Verbindungskanals zwischen dem der Austrittsöffnung nächstgelegenen Laminatbildungsbereich und der Austrittsöffnung des Extrusionskopfes so bemessen wird, daß es gleich dem Volumen eines Vorformlings ist. Es ist auch möglich, daß das Volumen des Verbindungskanals zwischen dem Laminatbildungsbereich und der Austrittsöffnung des Extrusionskopfes so bemessen wird, daß es den Bedingungen des Anspruches 2 entspricht zuzüglich einem ganzzahligen Vielfachen des Volumens für einen Vorformling. Als besonders vorteilhaft hat sich eine Verfahrensführung herausgestellt, bei welcher der sich aus den Volumen-Teilabschnitten gestörten Laminats sich zusammensetzende gesamte Volumen-Abschnitt gestörten Laminats auf zwei benachbarte Volumen-Endabschnitte zweier aufeinanderfolgend ausgestoßener Vorformlinge verteilt wird, so daß der eine Volumen-Teilabschnitt gestörten Laminates sich im Volumen-Endabschnitt an einem Ende eines Vorformlings und der zweite Volumen-Teilabschnitt gestörten Laminats sich im Volumen-Endabschnitt am entsprechend anderen Ende des im folgenden Arbeitszyklus hergestellten Vorformlings befindet. Es ist aber auch eine Verfahrensführung möglich, bei welcher der gesamte Volumen-Abschnitt gestörten Laminates sich in nur einem Volumen-Endabschnitt des Vorformlings befindet.

Die Erfindung betrifft weiterhin eine Vorrichtung zum Herstellen von Hohlkörpern aus thermoplastischem Kunststoff, deren Wandung aus einem wenigstens zwei Schichten aufweisenden Laminat besteht, durch Extrusions-Blasformen mit einer Extrusionseinheit, die wenigstens zwei Extruder und einen gemeinsamen Extrusionskopf mit einer ringförmigen Austrittsöffnung aufweist und mit Speicherräumen zum Speichern der in den Extrudern plastifizierten Materialien und mit Mitteln zum Ausstoßen dieser gespeicherten Materialien aus den Speicherräumen zur Bildung von Vorformlingen versehen ist, wobei die Vorrichtung wenigstens eine geteilte, mit Abquetschkanten versehene Hohlform mit wenigstens einem Formnest aufweist, innerhalb dessen zumindest ein Teilbereich des Volumen-Mittelabschnittes des Vorformlings unter innerem Überdruck zum Hohlkörper aufgeweitet wird und an wenigstens einem Ende des Volumen-Mittelabschnittes ein Volumen-Endabschnitt abgequetscht wird und innerhalb des Extrusionskopfes wenigstens ein Laminatbildungsbereich vorhanden ist, in welchem die Materialströme für die einzelnen Schichten der Wandung zur Bildung des Laminats miteinander verbunden werden, und der Laminatbildungsbereich über einen Verbindungskanal, durch welchen das Laminat in Richtung auf die Austrittsöffnung fließt, mit letzterer verbunden ist. Eine derartige Vorrichtung ist dadurch gekennzeichnet, daß das Volumen des Verbindungskanals zwischen dem Laminatbildungsbereich und der Austrittsöffnung so gewählt ist, daß im Laminat befindliche gestörte Bereiche, die am Anfang und/oder am Ende des Entleerungshubes entstehen, mit welchem die Speicherräume entleert werden, in wenigstens einem der abzuquetschenden Volumen-Endabschnitte des Vorformlinges angeordnet sind.

Als besonders zweckmäßig hat es sich herausgestellt, das Volumen des Verbindungskanals zwischen dem Laminatbildungsbereich und der Austrittsöffnung so zu wählen, daß es folgenden Bedingungen genügt:

$$Vk \geq x \cdot Vp - Vb + Vve \text{ und}$$
$$Vk \leq x \cdot Vp + Vc - Vvs,$$

wobei $x = 1$ oder ein ganzzahliges Vielfaches von 1 ist und
$Vp$ der den Vorformling bildende Volumen-Gesamtabschnitt,
$Vb$ der in Fließrichtung des Laminats hintere abzuquetschende Volumen-Endabschnitt,
$Vc$ der in Fließrichtung des Laminats vordere abzuquetschende Volumen-Endabschnitt,
$Vve$ der in Fließrichtung des Laminats hintere Volumen-Teilabschnitt gestörten Laminats,
$Vvs$ der in Fließrichtung des Laminats vordere Volumen-Teilabschnitt gestörten Laminats
ist, wobei die zusätzliche Bedingung gilt, daß

$$Vvs + Vve \leq Vb + Vc.$$

Wenn die vorstehenden Bedingungen eingehalten werden, ist in jedem Fall eine Gewähr dafür gegeben, daß sich die Bereiche gestörten Laminates nicht in dem Volumen-Mittelabschnitt des den Vorformling bildenden Volumen-Gesamtabschnittes befinden, aus welchem der herzustellende Hohlkörper, also das Fertigerzeugnis, geformt wird.

Es ist möglich, die Speicherräume für das thermoplastische Material im Extrusionskopf oder außerhalb des Extrusionskopfes anzuordnen. Eine andere Möglichkeit besteht darin, die Speicherräume für das thermoplastische Material teilweise im Extrusionskopf und teilweise außerhalb desselben anzuordnen.

Die Anzahl der Speicherräume kann der Anzahl der Schichten des Laminats bzw. der Wandung des daraus herzustellenden Hohlkörpers entsprechen, wenngleich dies nicht zwingend erforderlich ist.

Um das Volumen des Verbindungskanals ohne große Schwierigkeiten an das zur Herstellung eines bestimmten Hohlkörpers jeweils erforderliche Volumen anpassen zu können, schlägt die Erfindung weiterhin vor, daß das Volumen des Verbindungskanals innerhalb eines bestimmten Bereiches stufenlos veränderbar ist. Auf diese Weise ist es möglich, denselben Extrusionskopf für die Herstellung von Vorformlingen mit unterschiedlichen Volumina zu benutzen. Eine Änderung des Volumens wird im allgemeinen dann notwendig sein, wenn das Gewicht des herzustellenden Hohlkörpers geändert oder die Extrusionseinheit von der Herstellung einer Hohlkörperart auf die Herstellung einer anderen Hohlkörperart umgestellt werden muß. Die Anpassung des Volumens des Verbindungskanals an das jeweilige Vorformlingsvolumen kann durch ein Verdrängerelement bewirkt werden, das z. B. als ringförmiger Kolben ausgebildet ist, der einen Teil der Begrenzungswandung des Verbindungskanals derart bildet, daß das Volumen des Verbindungskanals durch die Position des Verdrängerelementes bestimmt wird. Eine andere Möglichkeit besteht darin, den Bereich des Extrusionskopfes, in welchem sich der Verbindungskanal befindet, durch Auswahl entsprechend bemessener Bauteile so auszubilden, daß das zur Herstellung eines bestimmten Vorformlings benötigte Volumen des Verbindungskanals vorhanden ist.

In der Zeichnung sind derzeit bevorzugte Ausführungsbeispiele der Erfindung dargestellt. Es zeigen:

Fig. 1 im Schema die Seitenansicht einer Extrusionsblasvorrichtung mit einem Extrusionskopf und zugehöriger Blasform, teilweise im Schnitt,

Fig. 2 im Schema einen Längsschnitt durch den Extrusionskopf,

Fig. 3 einen Schnitt nach der Linie III-III der Fig. 2,

Fig. 4 im Schema die Vorderansicht der Extrusionsblasvorrichtung gemäß Fig. 1 mit geöffneter Blasform,

Fig. 5 eine perspektivische Ansicht der Extrusionsblasvorrichtung gemäß Fig. 1 mit geschlossener Blasform,

Fig. 6 eine Einzelheit aus dem Extrusionskopf in grösserem Maßstab, teilweise im Schnitt, mit Teilen in einer Position während des Entleerungshubes,

Fig. 7 eine der Fig. 6 entsprechende Darstellung, jedoch mit Teilen in einer Position am Ende des Entleerungshubes,

Fig. 8a im Schema einen Längsschnitt des Bereichs eines Extrusionskopfes zwischen Laminatbildungsstelle und Austrittsöffnung einer zweiten Ausführungsform,

Fig. 8b eine der Fig. 8a entsprechende Darstellung am Ende des folgenden Arbeitszyklus',

Fig. 9 die graphische Darstellung der Positionierung der Bereiche gestörten Laminats im Vorformling in Abhängigkeit vom Volumen des Verbindungskanals,

Fig. 10 die Darstellung einer dritten Ausführungsform,

Fig. 11 eine der Fig. 10 entsprechende Darstellung mit den Teilen in einer Position am Ende des Entleerungshubes.

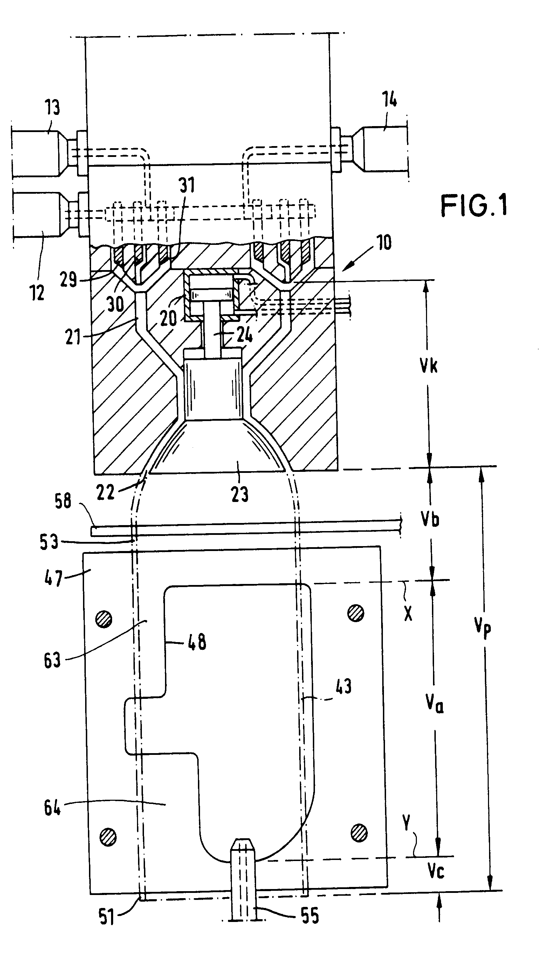

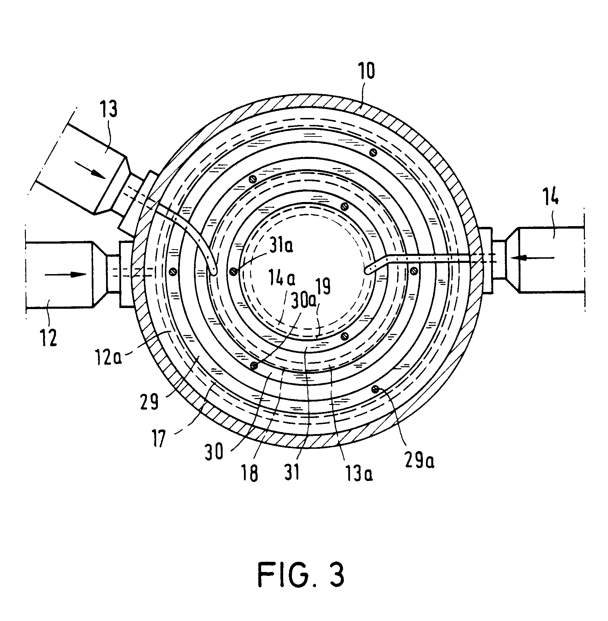

Die in den Figuren 1 - 7 der Zeichnung dargestellte Vorrichtung dient zur Herstellung von Hohlkörpern, deren Wandung aus drei Schichten besteht. Demzufolge ist der Extrusionskopf 10, dem drei Extruder 12, 13, 14 zugeordnet sind, mit drei Kanälen 17, 18, 19 versehen, die im Querschnitt ringförmig ausgebildet und zueinander im wesentlichen koaxial angeordnet sind. Die drei Kanäle 17, 18, 19, von denen jeder unter Zwischenschaltung eines ringförmigen Verteilerkanals 12a, 13a, 14a mit jeweils einem Extruder verbunden ist, münden in einen ringförmigen Verbindungskanal 21, der am unteren Ende des Extrusionskopfes 10 in die ringförmige Austrittsöffnung 22 mündet. Letztere wird innenseitig durch einen Kern 23 begrenzt, der von einer mit dem Kolben einer Zylinder-Kolben-Anordnung 20 verbundenen Stange 24 getragen wird und zur Beeinflussung der radialen Breite der Austrittöffnung 22 und damit der Wanddicke des herzustellenden Vorformlings durch die Zylinder-Kolben-Anordnung 20 vertikal verschiebbar ist. Die Beeinflussung der Wanddicke wird dadurch ermöglicht, daß der Kern 23 zumindest in seinem unteren Bereich von oben nach unten sich konisch erweiternd ausgebildet ist. Entsprechendes gilt für die Ausnehmung im unteren Teil des Extrusionskopfes 10, die den Kern 23 aufnimmt.

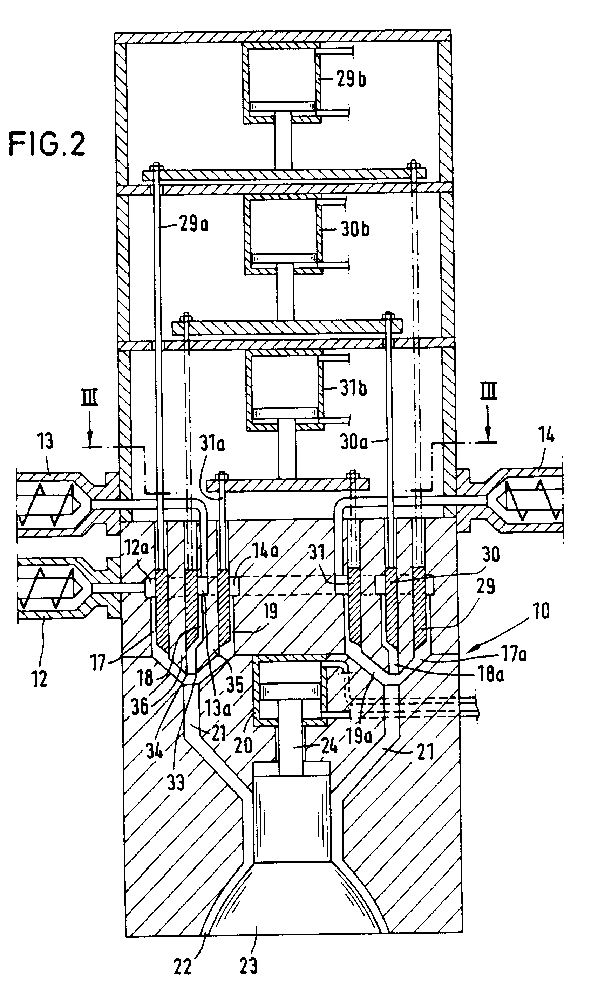

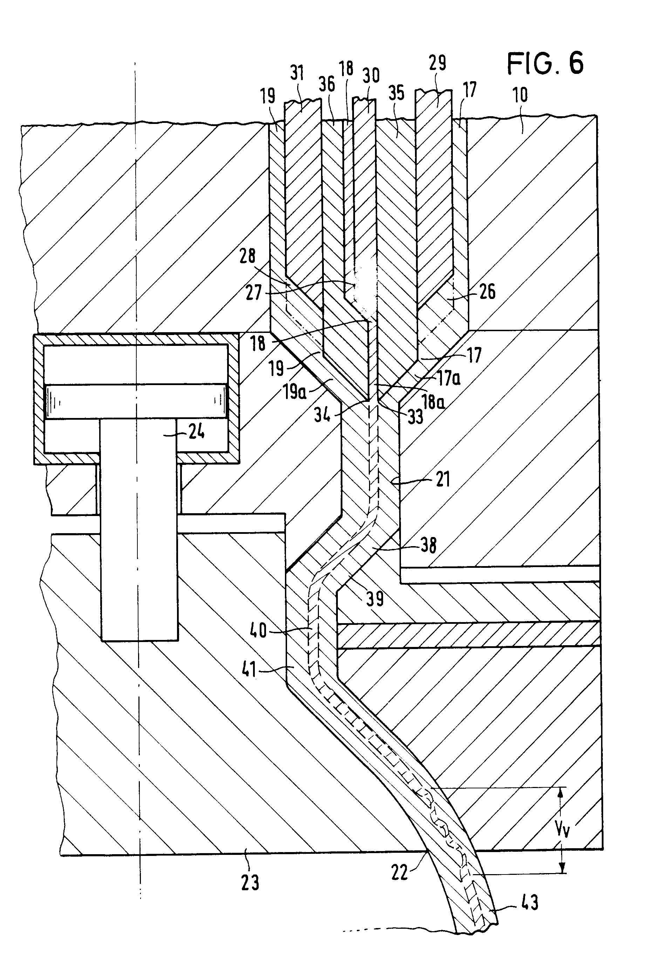

Insbesondere Fig. 6 läßt erkennen, daß bei dem dargestellten Ausführungsbeispiel in jedem der drei Kanäle 17, 18, 19 ein ringförmiger Speicherraum 26, 27, 28 angeordnet ist. Jedem der Speicherräume 26, 27, 28 ist ein Ringkolben 29 bzw. 30 bzw. 31 zugeordnet. Jeder Ringkolben 29, 30, 31 ist jeweils durch Stangen 29a, 30a, 31a mit jeweils einer hydraulischen Zylinder-Kolben-Anordnung 29b, 30b, 31b verbunden, die eine Bewegung der Kolben parallel zur Längsachse des Extrusionskopfes 10 und damit zur Stange 24 bewirkt (Fig. 2).

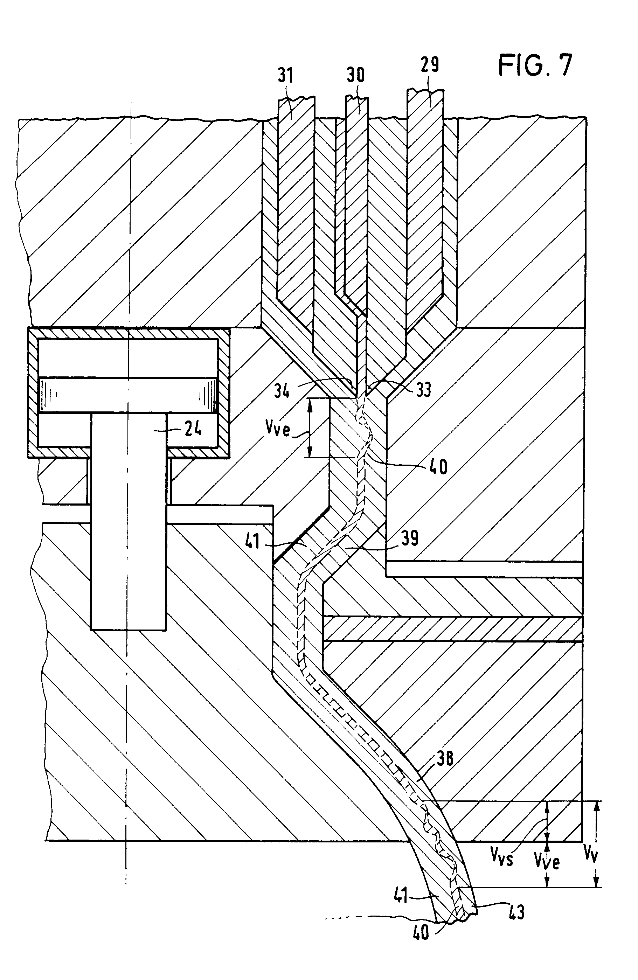

Anordnung und Arbeitsweise der Kolben 29, 30, 31 im jeweiligen Speicherraum 26, 27, 28 entsprechen jeweils der Anordnung und der Arbeitsweise, die in der DE-PS 1.704 791 und der entsprechenden US-PS 3.611.494 im Zusammenhang mit einem nur einen Speicherraum und einen Ringkolben aufweisenden Extrusionskopf beschrieben sind. D. h., daß das vom jeweiligen Extruder 12, 13, 14 durch den jeweils zugehörigen Kanal 17, 18, 19 kommende Material den jeweiligen Ringkolben 29, 30 bzw. 31 nach oben verdrängt und dabei den zugeordneten Speicherraum füllt. Sobald die Ringkolben 29, 30, 31 ihre obere Endposition erreicht haben, was nach Möglichkeit zum selben Zeitpunkt geschehen sollte, werden sie durch entsprechende Beaufschlagung des zugehörigen Zylinders im wesentlichen gleichzeitig nach unten in die in Fig. 7 dargestellte jeweilige untere Endposition verschoben mit dem Ergebnis, daß die in den Speicherräumen befindlichen Kunststoffmaterialien in Richtung auf den Verbindungskanal 21 und damit auf die Austrittsöffnung 22 verschoben werden. Während dieser die Speicherräume 26, 27, 28 entleerenden gleichzeitig stattfindenden Kolbenhübe wird, falls die dem Extrusionskopf 10 vorgeschalteten Extruder kontinuierlich laufen, zusätzliches Material durch die Kanäle 17, 18, 19 in Richtung auf den Verbindungskanal 21 durch diese Extruder bewegt. Dieser auf die Extruder während des Ausstoßhubes der Kolben zurückgehende Materialanteil ist jedoch relativ gering.

Die die Speicherräume 26, 27, 28 verlassenden Materialanteile gelangen durch die an die Speicherräume jeweils anschließenden Abschnitte 17a bzw. 18a bzw. 19a der Kanäle 17 bzw. 18 bzw. 19, in den Verbindungskanal 21, in welchem sich die Einzelströme der Materialanteile nach Passieren der unteren umlaufenden Endkanten 33, 34 der die Speicherräume 26, 27, 28 bzw. die Kanäle 17, 18, 19 begrenzenden umlaufenden Trennwände 35, 36 zu einem laminatförmigen Materialstrom 38 (Fig. 6) vereinigen, der aus drei Schichten 39, 40, 41 besteht, von denen die Schicht 39 aus dem Kanal 17 bzw. dem zugehörigen Extruder 12, die mittlere Schicht 40 aus dem Kanal 18 bzw. dem zugehörigen Extruder 13 und die dritte Schicht 41 aus dem Kanal 19 bzw. dem zugehörigen Extruder 14 kommt.

Fig. 6 zeigt den Betriebszustand während eines Ausstoßvorganges zur Bildung eines Vorformlings 43, wobei die Ringkolben 29, 30, 31 eine Position kurz vor der unteren, in Fig.6 strichpunktiert dargestellten Endlage, also vor Abschluß des Austoßvorganges, einnehmen. Bei diesem Ausführungsbeispiel sind die Schichten 39 und 41 des Laminats 38 etwa gleich dick, wohingegen die mittlere Schicht 40 merklich dünner ist. Demzufolge ist auch der Speicherraum 27 für das die mittlere Schicht 40 bildende Material merklich kleiner als die beiden anderen Speicherräume 26, 28 für das die Schichten 39 bzw. 41 bildende Material. Während des Ausstoßvorganges stellt sich in dem von den einzelnen Materialströmen und dem Laminat 38 gebildeten System ein Druckgleichgewicht ein, so daß an der Laminatbildungsstelle, die die Schichten 39, 40, 41 bildenden Materialströme bei Verlassen der Abschnitte 16a, 18a, 20a der zugehörigen Kanäle sich zu einem bezüglich Dicke und relativer Anordnung der einzelnen Schichten regelmäßig ausgebildeten Laminat 38 vereinigen. Bei dem in den Fig. 1 - 7 der Zeichnung dargestellten Ausführungsbeispiel liegt die Laminatbildungsstelle in der Ebene oder unmittelbar darunter, in der sich die umlaufenden Begrenzungskanten 33, 34 der beiden Trennwände 35, 36 befinden. Dabei ist die Auswahl der die einzelnen Teilströme bildenden Materialien so getroffen, daß die resultierenden Schichten 39, 40, 41 an ihren Kontaktflächen eine haltbare Verbindung miteinander eingehen.

Am Anfang und/oder am Ende jedes Entleerungshubes wird jedoch im Normalfall ein derartiges, das Entstehen eines gleichmäßig ausgebildeten Laminats begünstigendes Druckgleichgewicht in diesem System nicht vorhanden sein. Dies kann mehrere Ursachen haben. Eine dieser Ursachen kann darin bestehen, daß die meisten thermoplastischen Kunststoffe und mit ihnen vergleichbare Materialien, die zur Herstellung von mehrschichtigen Hohlkörpern verwendet werden, in plastifiziertem Zustand sich nicht wie eine ideale Flüssigkeit verhalten, sondern unter Druckeinwirkung in einem bestimmten Ausmaß komprimierbar sind. Andererseits tritt bei Beendigung der Druckeinwirkung, ggf. mit gewisser zeitlicher Verzögerung, wieder eine Dekomprimierung mit der Folge einer entsprechenden Vergrößerung des Volumens ein.

Diese Eigenschaft der meisten Kunststoffe hat zur Folge, daß in der ersten Phase des Entleerungshubes die Bewegung der Kolben zunächst eine gewisse Komprimierung des im Speicherraum vorhandenen Materials bewirkt, bevor am unteren Ende des Speicherraums und damit auch an der Laminatbildungsstelle in der Ebene der umlaufenden Kanten 33, 34 eine durch die Verschiebung der Kolben bewirkte Bewegung der einzelnen Teilströme beginnt. Dies wäre möglicherweise dann wenig problematisch, wenn alle die Teilströme bildenden Materialien sich in gleicher Weise verhielten und die Speicherräume mit ihren Kanälen gleiche Volumen aufwiesen. Dies ist jedoch nicht der Fall. Vielmehr können unterschiedliche Materialien in unterschiedlichen Ausmaßen komprimierbar sein. Hinzu kommt, daß die durch die Komprimierbarkeit der Materialien bewirkte Verzögerung der Bewegung an der Laminatbildungsstelle 33, 34 auch beeinflußt wird durch die Volumen der einzelnen Materialanteile, die durch den jeweils zugehörigen Kolben druckbeaufschlagt werden. Bei der in Fig. 1 - 7 der Zeichnung dargestellten Ausführungsform ist das Volumen jedes der beiden Speicherräume 26 und 28 wesentlich größer als das Volumen des Speicherraumes 27 für die mittlere Schicht 40 des zu bildenden Laminats 40. Mithin ist bei jeder der in den Speicherräumen 26 bzw. 28 gespeicherten Materialmenge die absolute Volumenänderung normalerweise größer als bei der wesentlich kleineren Materialmenge im Speicherraum 27 mit der Folge, daß bei synchroner Bewegung der drei Ringkolben 29, 30, 31 während des Entleerungshubes das Material im Speicherraum 27 am unteren Ende des Speicherraums und damit im Bereich der Laminatbildung 33, 34 sich früher unter der Einwirkung des zugehörigen Kolbens 30 zu bewegen beginnt als das Material an den unteren Enden der Speicherräume 26 und 28.

Eine andere Einflußgröße, die ebenfalls das Druckgleichgewicht stören kann, ergibt sich daraus, daß die Strömungsbedingungen, denen die einzelnen Teilströme vor ihrer Vereinigung zum Laminat unterliegen, unterschiedlich sind. Dies ist insbesondere zurückzuführen auf unterschiedliche Fließwiderstände, die schon dadurch verursacht werden, daß die Materialmengen für die einzelnen Schichten unterschiedlich sind und normalerweise auch die Kanäle, durch welche die Teilströme fließen, unterschiedliche Querschnitte aufweisen. Ein Kanal oder ein Speicherraum mit einem kleineren Querschnitt weist einen größeren Strömungswiderstand auf als ein Kanal mit großem Querschnitt.

Alle diese Einflüsse, die im wesentlichen gleichzeitig auftreten, somit einander überlagern und nach ihrer Größe und bezüglich ihrer Auswirkungen nicht ohne weiteres bestimmbar sind, wirken sich zunächst in der ersten Phase des Ausstoßvorganges aus mit der Folge, daß im Laminatbildungsbereich, also unmittelbar unterhalb der unteren Begrenzungskanten 33, 34, ein Druckungleichgewicht herrscht, welches dazu führt, daß die Schichten des Laminats ihre Fließbewegung ungleichmäßig beginnen und bezüglich ihrer absoluten und ihrer relativen Lage unregelmäßig positioniert sind und ggf. von ihrer jeweiligen Soll-Schichtstärke abweichende Schichtstärken aufweisen. Sobald jedoch das gesamte aus den Teilströmen und dem Laminat bestehende System unter der Einwirkung des Entleerungshubes der Kolben in gleichmäßiger Bewegung ist, stellt sich ein Druckgleichgewicht ein, welches das Entstehen eines regelmäßig ausgebildeten Laminats bewirkt.

Eine weitere Unregelmäßigkeit kann am Ende des Entleerungshubes eintreten, und zwar insbesondere aufgrund der sich dann einstellenden Ausdehnung des die einzelnen Schichten bildenden Materials nach Beendigung der Druckbeaufschlagung durch die Kolben 29, 30, 31. Die nachteiligen Effekte bleiben auch hierbei beschränkt auf den Bereich der Laminatbildungsstelle im unmittelbaren Anschluß an die Begrenzungskanten 33, 34, da der Druckausgleich, der am Ende des Entleerungshubes eintritt, sich nur in den Kanälen 17-19 mit den jeweils zugehörigen Speicherräumen, wo er im allgemeinen unschädlich ist, und im Bereich der Laminatbildungsstelle auswirkt. An den hierbei - also am Ende des Entleerungshubes - entstehenden gestörten Laminatbereich schließt sich der zu Beginn des Entleerungshubes des folgenden Arbeitszyklus' verursachte gestörte Laminatbereich unmittelbar an, so daß die am Anfang und am Ende eines Entleerungshubes entstehenden gestörten Laminatsbereiche einen gestörten Gesamtbereich darstellen, der in zwei aufeinanderfolgenden Arbeitszyklen entstanden ist. Die Länge des Gesamtbereichs ist in Fließrichtung des Materials jedenfalls dann sehr kurz wenn, wie beim Ausführungsbeispiel gemäß Fig. 1 - 7, sämtliche Begrenzungskanten 33, 34 der Trennwände 35, 36 in einer Ebene liegen und somit auch der Laminatbildungsbereich nur eine ganz kurze Erstreckung in Fließrichtung aufweist.

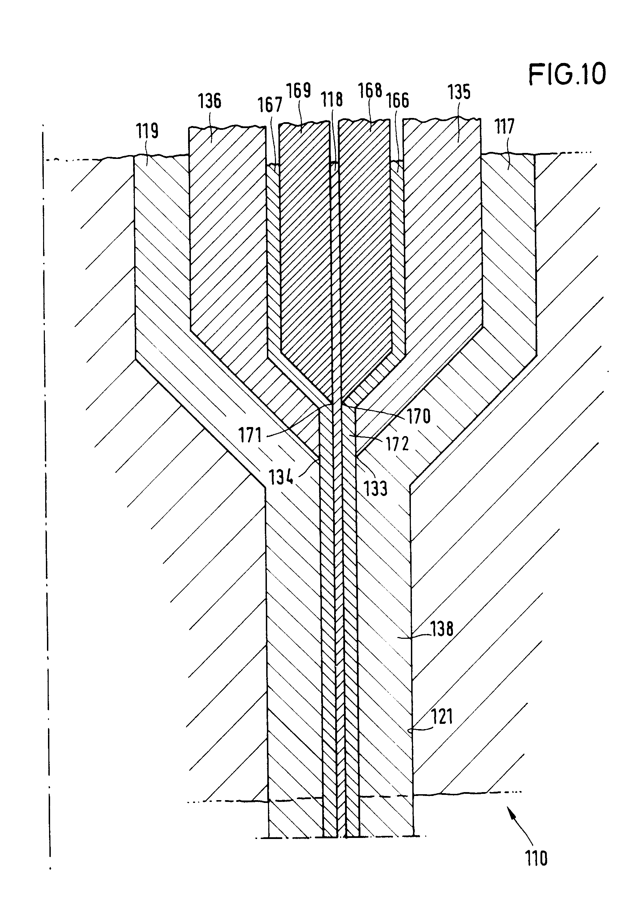

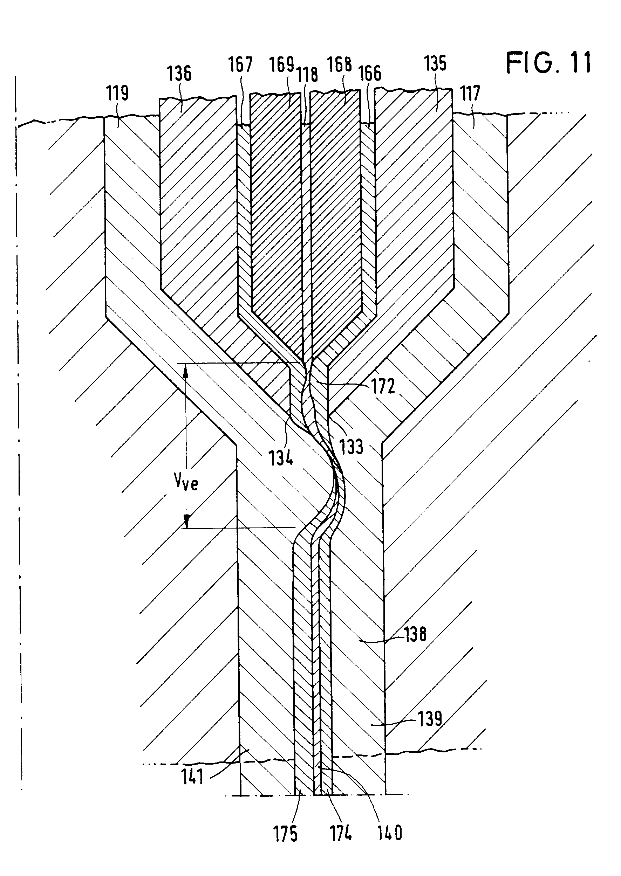

Aber auch dann, wenn die axiale Erstreckung des Laminatbildungsbereiches innerhalb des Extrusionskopfes etwas größer ist, wie beispielsweise bei der Ausführungsform gemäß den Fig. 10 und 11, ist die axiale Erstreckung des gestörten Bereichs im Laminat nicht sehr groß, da, wie vorstehend erläutert, die die Störung verursachenden Einflüsse am Ende eines Entleerungshubes und am Beginn des Entleerungshubes des folgenden Arbeitszyklus' sich weitgehend auf denselben Bereich des Laminats im Bereich der Laminatbildungsstelle auswirken können.

Fig. 6 der Zeichnung zeigt das den Verbindungskanal 21 durchströmende Laminat kurz vor Beendigung des Entleerungshubes. Das aus den Schichten 39, 40, 41 bestehende Laminat ist im Bereich der Laminatbildungsstelle regelmäßig und störungsfrei ausgebildet, da in dieser Phase der Herstellung eines Vorformlings 43 im Gesamtsystem und somit auch an der Laminatbildungsstelle Druckgleichgewicht herrscht. Sämtliche Schichten weisen somit auch im Bereich der Laminatbildungsstelle die richtige Stärke und relative Zuordnung auf. Lediglich im Bereich der Austrittsöffnung 22 befindet sich ein Abschnitt Vv gestörten Laminats, der aus zwei Teilabschnitten Vve und Vvs besteht, die durch die beschriebenen Einflüsse am Ende des vorangegangenen und am Anfang des laufenden Entleerungshubes entstanden sind. Sobald die Kolben 29, 30 und 31 am Ende des Entleerungshubes ihre in Fig. 7 dargestellte untere Endposition erreicht haben, ändern sich die Druckverhältnisse im Extrusionskopf, da der durch die Kolben 29, 30, 31 auf die einzelnen Teilströme jeweils ausgeübte Druck aufhört. Die Kolben werden nunmehr unter der Einwirkung des vom jeweils zugeordneten Extruder kommenden Materials wieder nach oben in Richtung auf ihre obere Endposition verschoben, wobei gleichzeitig die Speicherräume 26, 27 und 28 mit Material für den im nächsten Arbeitszyklus herzustellenden Vorformling 44 gefüllt werden. Hierbei kann es wiederum zu Änderungen der Druckverhältnisse im Extrusionskopf 10 kommen, so daß in den einzelnen Kanälen 17, 18 und 19 sowie ggf. in den zugeordneten Speicherräumen 26 bzw. 27 bzw. 28 unterschiedliche Drücke entstehen. Das dadurch im Bereich der Kanäle 17, 18, 19 bewirkte unterschiedliche Fließverhalten der einzelnen Teilströme ist bei normalen Betriebsverhältnissen ohne große Bedeutung, da in diesem Bereich des Systems die Teilströme noch nicht zum Laminat verbunden sind. Es ist aber unvermeidbar, daß bei Vorhandensein unterschiedlicher Drücke in den einzelnen Kanälen 17, 18, 19 und den zugehörigen Speicherräumen ein Druckausgleich innerhalb dieses Systems sich einstellt. Dies kann im wesentlichen nur über den Bereich geschehen, in welchem die Laminatbildung erfolgt, also unmittelbar unterhalb der Begrenzungskanten 33 und 34, da in diesem Bereich die einzelnen Kanäle 17, 18, 19 über die Abschnitte 17a, 18a, 19a mit dem daran anschließenden Verbindungskanal 21 verbunden sind. Dies führt zwangsläufig dazu, daß im Bereich der Mündung der Abschnitte 17a, 18a, 19a in den Verbindungskanal 21, also im Laminatbildungsbereich, das dort befindliche, bereits ein Laminat bildende Material vom Bereich höheren Drucks in den Bereich niederen Drucks verschoben wird. Da bei dem Ausführungsbeispiel gemäß den Fig. 1 - 7 insgesamt drei Kanäle 17, 18, 19 vorhanden sind und sich somit drei voneinander abweichende Druckhöhen einstellen können, werden sich die zur Herstellung des Druckausgleichs einstellenden im wesentlichen quer zur Hauptströmungsrichtung des Laminats 38 erfolgenden Bewegungen des das Laminat bildenden Materials an dieser Stelle unkontrolliert überlagern mit dem Ergebnis, daß im Laminat ein Bereich Vve entsteht, in welchem die einzelnen Schichten 39, 40, 41 eine von der Soll-Dicke jeweils abweichende Dicke aufweisen und darüber hinaus auch ihre Lage verändern können. Mögliche Ausgestaltungen des durch den Druckausgleich am Anfang und am Ende des Entleerungshubes verursachten gestörten Abschnittes sind in Fig. 6 und 7 der Zeichnung dargestellt. In diesem Abschnitt ist z. B. die mittlere Schicht 40 sehr viel dünner ausgebildet, teilweise nur noch andeutungsweise vorhanden. Außerdem ist der Verlauf der Berührungsflächen zwischen den einzelnen Schichten 39, 40, 41 ganz unregelmäßig, was wiederum dazu führt, daß in diesen Bereichen die Schichten jeweils eine Dicke aufweisen, die von der Soll-Dicke merklich abweicht.

Nach Beendigung des Füllens der Speicherräume 26, 27, 28, d.h., nach Erreichen der obere Endposition der Kolben 29, 30, 31, erfolgt die Herstellung des Vorformlings 43, der einen Volumen-Gesamtabschnitt darstellt, für den nächsten Arbeitszyklus. Dazu werden zwecks Entleerung der Speicherräume 26, 27, 28 die Kolben 29, 30, 31 wieder aus ihrer oberen Endposition in die untere, in Fig. 7 dargestellte Endposition verschoben. Zu Beginn des Entleerungshubes kann, wie bereits beschrieben, erneut ein Druckungleichgewicht im System entstehen, welches an der Laminatbildungsstelle, also unmittelbar unterhalb der Begrenzungskanten 33, 34 der Trennwände 35, 36, zu unkontrollierten Bewegungen der einzelnen Schichten des dort bereits vorhandenen Laminats führt. Die dadurch verursachte Störung des Schichtenverlaufs im Teilabschnitt Vvs wird in der Regel im Anschluß an den Teilabschnitt Vve auftreten, der bereits am Ende des vorangegangenen Entleerungshubes aufgrund der geschilderten Einflüsse gestört worden war, wobei in dieser ersten Phase des Entleerungshubes auch bereits eine Verschiebung des im Verbindungskanal 21 befindlichen Laminats in Richtung auf die Austrittsöffnung 22 erfolgen kann, so daß dadurch der bereits vorhandene Teilabschnitt Vve gestörten Laminats in Fließrichtung eine Verlängerung um den Teilabschnitt Vvs erfährt, wobei beide Teilabschnitte zusammen den Volumenabschnitt Vv gestörten Laminats bilden. Die zu Beginn des Entleerungshubes verursachten Störungen können sich ggf. bis in den bereits gestörten Teilabschnitt Vve auswirken, so daß die Teilabschnitte Vve und Vvs ggf. nicht klar voneinander abgesetzt sind. Sobald sich im Zuge des Entleerungshubes ein Druckgleichgewicht eingestellt hat, wird das Laminat auch im Bereich der Laminatbildungsstelle die ungestörte Schichtung aufweisen, die z. B. in Fig. 6 dargestellt ist.

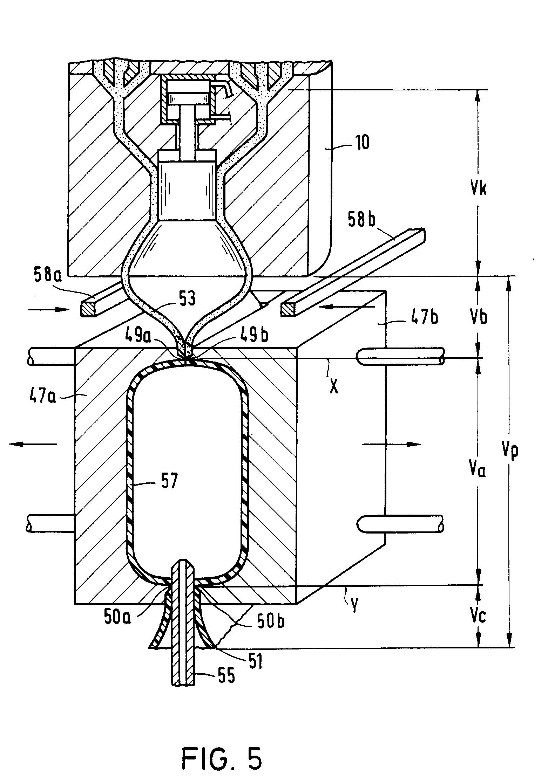

Unterhalb des Extrusionskopfes 10 ist eine Blasform 47 angeordnet, die aus zwei Teilen 47a, 47b besteht. Beide Blasformteile sind an ihren einander zugekehrten Seiten mit jeweils einer Ausnehmung 48a, 48b versehen. Bei geschlossener Blasform (Fig. 5) ergänzen sich diese Ausnehmungen zu einem Formnest 48.

Die Formhälften 47a, 47b sind darüber hinaus mit Quetschkanten 49a, 49b; 50a, 50b zumindest in den Bereichen versehen, an denen vom Vorformling 43 beim Schließen der Form durch Zusammenfahren der beiden Formhälften 47a, 47b überschüssiges Material abgequetscht wird. Dies ist normalerweise an den beiden Enden des Vorformlinges 43 der Fall.

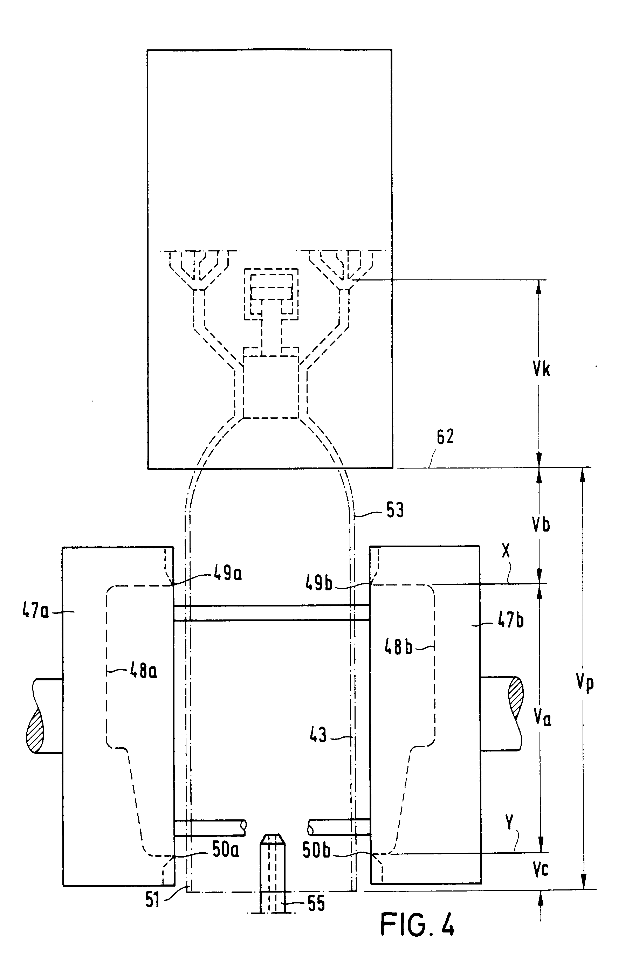

Beim Ausstoßen des Vorformlinges 43 aus dem Extrusionskopf 10 ist die Blasform 47 geöffnet (Fig. 4). Der zunächst zwischen beiden Formteilen 47a, 47b der geöffneten Blasform 47 befindliche, den Vorformling 43 bildende Volumen-Gesamtabschnitt Vp ist länger als die vertikale Erstreckung des Formnestes 48. Am unteren Ende des Formnestes 48 ist ein Volumen-Endabschnitt Vc des Volumen-Gesamtabschnittes Vp vorhanden, der sich beim Ausführungsbeispiel gemäß den Figuren 1-7 unterhalb der zur Längsachse des Vorformlings 43 senkrechten Tangente y an den an dieser Seite der Form vorhandenen Abquetschkanten 50a, 50b befindet. Am oberen Ende des Volumen-Gesamtabschnittes Vp ist ein Volumen-Endabschnitt Vb vorhanden, der sich oberhalb der Tangente x an den oben an der Blasform 47a, 47b angebrachten Abquetschkanten 49a, 49b, also ebenfalls außerhalb des Formnestes 48 befindet. Beim Schließen der Blasform 47 durch Bewegen der beiden Blasformteile 45a, 45b aus der Position gemäß Fig. 4 in die der Fig. 5 werden die unten und oben am Vorformling 44 befindlichen Volumen-Endabschnitte Vc, Vb als Überschußmaterial , welches Abfall darstellt, der im allgemeinen rezykliert wird, durch die zugehörigen Abquetschkanten 50a, 50b bzw. 49a, 49b abgequetscht.

Fig. 1 der Zeichnung läßt erkennen, daß darüber hinaus auch am linken, seitlichen Bereich des Formnestes 48 sich Teilbereiche 63, 64 des Vorformlings 43 außerhalb des Formnestes befinden. D.h., daß der Vorformling 43, ggf. nach Voraufweitung mittels innerem Überdruck, einen Durchmesser aufweist, welcher in einigen Teilbereichen größer ist als die Quererstreckung des Formnestes 48. Somit werden auch seitlich neben dem Formnest 48 die Teilbereiche 63, 64 des Vorformlings 43 beim Schließen der Blasform 47 durch letztere abgequetscht, wobei zusätzliche Abfallteile entstehen. Eine derartige Arbeitsweise ist insbesondere bei komplizierter Gestalt des herzustellenden Artikels mitunter notwendig. Sie gehört zum Stand der Technik und ist nicht Bestandteil der Erfindung, die sich mit den Abfallteilen 51, 53 befaßt, die oberhalb bzw. unterhalb der Tangenten x und y anfallen.

Der innerhalb des Formnestes 48 und somit zwischen den Abquetschkanten 50a, 50b einerseits und 49a, 49b andererseits verbleibende Bereich des Volumen-Mittelabschnittes Va des Vorformlings 43 wird durch ein Druckmittel, welches durch einen Blasdorn 55 in das Innere des im Formnest 48 befindlichen Bereichs des Mittelabschnitts Va eingeführt wird, bis zur Anlage an der Wandung des Formnestes 48 aufgeweitet. Auf diese Weise entsteht der Artikel 57 (Fig. 5), der an seinen beiden Enden die beiden Überschußmaterial bildenden Abfallteile 51, 53 aufweist, die auf die Volumen-Endabschnitte Vc, Vb zurückgehen. Diese Abfallteile 51, 53 bleiben im allgemeinen über dünne Stege mit dem aufgeweiteten Artikel 57 verbunden, die beim Entfernen der Abfallteile durchtrennt werden. Letzteres geschieht überwiegend nach dem Öffnen der Blasform 47, wobei, wenn es sich um einen größeren Artikel 57 handelt, letzterer durch einen Greifer 58, dessen Teile 58a, 58b am Abfallteil 53 angreifen, aus der Blasform 57 herausgenommen wird.

Beim Herausnehmen des Artikels 57 aus der Blasform 47 wird das obere Ende des Überschußmaterial darstellenden Abfallteiles 53 an der Öffnung 22 des Extrusionskopfes abgerissen, weil dort das Material noch am heißesten und damit am weichsten ist.

Die Länge und damit das Volumen des den Vorformling 43 darstellenden Volumen-Gesamtabschnittes Vp sind in diesem Fall durch den Abstand zwischen seinem unteren Ende und der Austrittsöffnung 22 des Extrusionskopfes 10 bestimmt. Das Volumen ergibt sich aus der Summe der Hubvolumina der Kolben 29, 30, 31 zuzüglich des Materialanteils, der bei kontinuierlichem Betrieb der Extruder 12, 13, 14 während des Entleerungshubes in den Extrusionskopf 10 gefördert wird. Bei dem in Fig. 1 - 7 der Zeichnung dargestellten Ausführungsbeispiel ist die Länge des Verbindungskanals 21 zwischen der Laminatbildungsstelle im Bereich der Kanten 33, 34 und der Austrittsöffnung 22 des Extrusionskopfes 10 so gewählt, daß das Volumen Vk des Sammelkanals 21 dem Volumen Vp eines Vorformlings 43 entspricht. D. h., daß das nach einem Entleerungshub durch die Kolben 29, 30, 31 und ggf. zusätzlich durch die kontinuierlich laufenden Extruder in den Sammelkanal 21 geförderte Material dort in Laminatform während der Dauer eines Arbeitszyklus' verbleibt, bevor es dann im darauffolgenden Arbeitszyklus aus dem Extrusionskopf 10 durch dessen Austrittsöffnung 22 ausgestossen und an letzterer abgetrennt wird.

Diese Anordnung hat den Vorteil, daß die bei jedem Entleerungshub möglicherweise entstehenden gestörten Bereiche im Laminat im daraus herzustellenden Vorformling, also nach Verlassen des Extrusionskopfes 10, sich in wenigstens einem der beiden Volumen-Endabschnitte Vb bzw. Vc des Vorformlings befinden, die beim Schließen der Blasform 45 außerhalb des Formnestes 48 bleiben, also nicht Bestandteil des durch Aufweiten hergestellten Artikels 57 werden.

Aus den vorstehenden Erläuterungen im Zusammenhang mit dem Ausführungsbeispiel gemäß den Fig. 1 - 7 ergibt sich, daß der den extrudierten Vorformling 43 bildende Volumen-Gesamtabschnitt sich zusammensetzt aus dem Volumen-Mittelabschnitt Va, der sich zwischen den oberen Abquetschkanten 49a, 49b der Blasform 47 bzw. der Ebene x und deren unteren Abquetschkanten 50a, 50b bzw. der Ebene y befindet, die beim Abquetschvorgang mit der Mantelfläche des Blasdorns 55 zusammenwirken, und den Volumen-Endabschnitten Vb und Vc. Der Volumen-Endabschnitt Vb entspricht dem Volumen des oberen Abfallteiles 53. Er erstreckt sich zwischen Austrittsöffnung 22 und den oberen Abquetschkanten 59a, 59b bzw. der Ebene x. Der Volumen-Teilabschnitt Vc entspricht dem Volumen des Abfallteiles 51. Er erstreckt sich zwischen dem freien Ende des Vorformlings 43 und den unteren Abquetschkanten 50a, 50b bzw. der Ebene y. Bei dem in Fig. 1 - 7 der Zeichnung dargestellten Ausführungsbeispiel zählen die seitlichen Bereiche 63, 64 des Vorformlings, die aufgrund der Ausgestaltung des Formnestes 48 (vgl. Fig. 1) beim Schließen der Blasform ebenfalls abgequetscht werden, zum Volumen-Teilabschnitt Va des Vorformlings, aus dem der Artikel hergestellt wird.

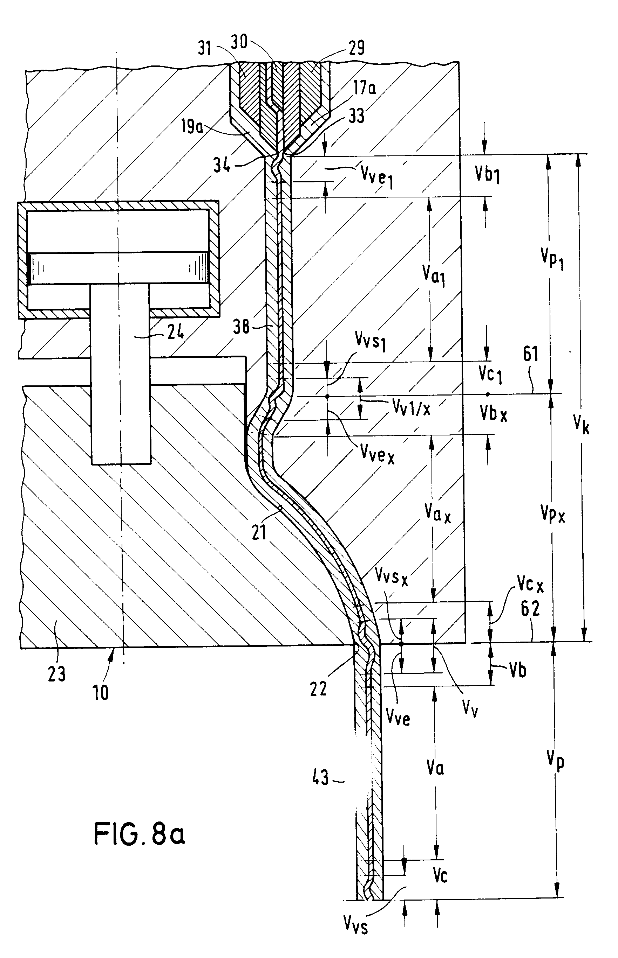

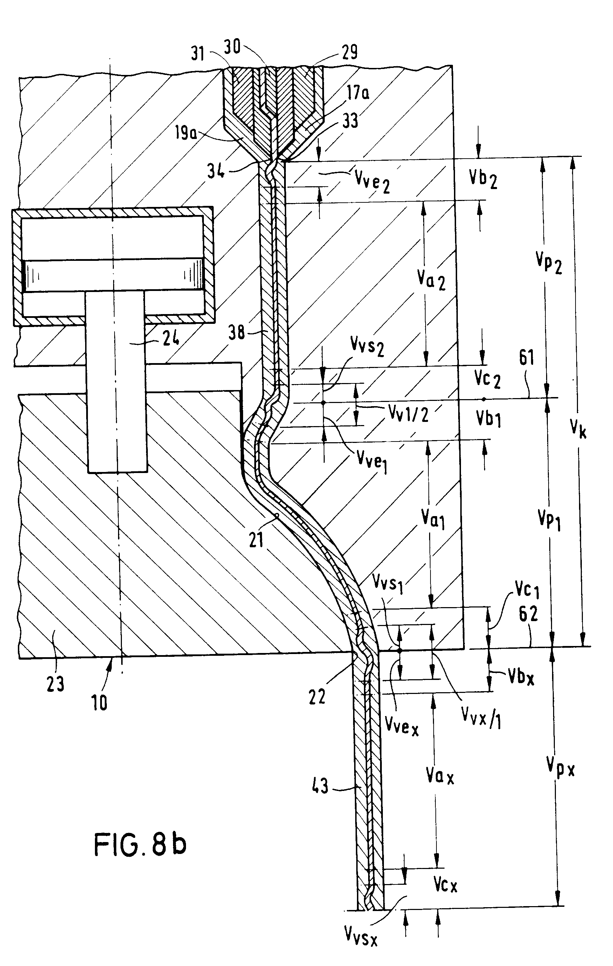

Vk kann, abweichend von dem Ausführungsbeispiel gemäß den Fig. 1 - 7, auch dem ganzzahligen Mehrfachen des Volumens Vp entsprechen. Der sich in beiden Fällen ergebende Effekt wird im folgenden anhand der Fig. 8a und 8b erläutert, die in sehr schematischer Darstellung einen Längsschnitt durch eine Hälfte jenes Bereichs des Extrusionskopfes 10 zeigen, die den Verbindungskanal 21 enthält. Letzterer weist zwischen der Laminatbildungsstelle, also etwa der Ebene, in welcher sich die beiden umlaufenden Endkanten 33, 34 der beiden Trennwände 35, 36 befinden, und der Austrittsöffnung 22 ein Volumen Vk auf, welches 2 Vp beträgt und mithin so bemessen ist, daß es dem Materialvolumen entspricht, welche zur Herstellung von zwei nacheinander zu extrudierenden Vorformlingen 43 erforderlich ist.

Die Fig. 8a und 8b zeigen den Betriebszustand am Ende jeweils eines von zwei aufeinanderfolgenden Entleerungshüben der den Speicherräumen zugeordneten Kolben 29, 30, 31. Bei dem in Fig. 8a dargestellten Betriebszustand am Ende des ersten Entleerungshubes enthält der Verbindungskanal 21 die beiden in Strömungsrichtung des Laminats hintereinander angeordneten Volumen-Gesamtabschnitte Vp1 bzw. Vpx, deren jeder gemäß der genannten Voraussetzung gleich ist dem Volumen Vp eines Vorformlings 43. Der Volumen-Gesamtabschnitt Vpx befindet sich beim Betriebszustand gemäß Fig. 8a unmittelbar vor der Austrittsöffnung 22, während der Volumenabschnitt Vp1 den Bereich zwischen dem Volumenabschnitt Vpx und der Laminatbildungsstelle ausfüllt. Unmittelbar unterhalb der umlaufenden Kanten 33, 34 befindet sich in dem den Volumen-Gesamtabschnitt Vp1 bildenden Laminat ein Volumen-Teilabschnitt Vve1 gestörten Laminats, dessen Entstehung am Ende des letzten Entleerungshubs bereits im Zusammenhang mit den Fig. 6 und 7 beschrieben worden war. Dieser Volumen-Teilabschnitt Vve1 bildet somit den in Fließrichtung des Laminats hinteren Endbereich des Volumenabschnittes Vp1, wobei er innerhalb des Volumen-Endabschnittes Vb1 angeordnet, dabei jedoch kürzer ist als letzterer.

Im folgenden Arbeitszyklus wird der Volumenabschnitt Vp1 im Zuge des Entleerungshubes der den Speicherräumen zugeordneten Kolben in Richtung auf die Austrittsöffnung 22 und dabei in die Position verschoben, die vorher der Volumenabschnitt Vpx eingenommen hatte, wobei gleichzeitig der bisherige Volumenabschnitt Vpx zur Bildung eines Vorformlings 43 aus dem Extrusionskopf ausgestoßen wird. Der Betriebszustand am Ende dieses Entleerungshubes ist in Fig. 8b dargestellt. Zu Beginn dieses Entleerungshubes erfolgt wiederum durch ungleichmäßigen Druckaufbau und andere Einwirkungen eine Beeinflussung des Materials an der Laminatbildungsstelle mit der Folge, daß das in der ersten Phase des Entleerungshubes im Verbindungskanal 21 sich bildende Laminat auch gestört sein kann. Somit kann der zum Volumen-Gesamtabschnitt Vp1 gehörende Volumen-Teilabschnitt Vve1 gestörten Laminats um einen nach oben daran anschließenden weiteren Volumen-Teilabschnitt Vvs2 gestörten Laminats verlängert werden, wobei beide Volumen-Teilabschnitte Vve1 und Vvs2 den Volumen-Abschnitt Vv1/2 gestörten Laminats bilden. Am Ende dieses Entleerungshubs liegt somit ein Betriebszustand vor, bei welchem der gestörte Volumen-Abschnitt Vv1/2 sich mit seinem Volumen-Teilabschnitt Vvs2 über einen Teil des Volumen-Endabschnittes Vc2 des Volumen-Gesamtabschnittes Vp2 und mit dem Volumen-Teilabschnitt Vve1 sich über einen Teil des Volumen-Endabschnittes Vb1 des nunmehr in unmittelbarem Anschluß an die Austrittsöffnung 22 im Extrusionskopf 10 befindlichen Volumen-Gesamtabschnitts Vp1 erstreckt. D. h., daß die - fiktive - Trennebene 61 zwischen den Volumenabschnitten Vp2 und Vp1 durch den gestörten Volumen-Abschnitt Vv1/2 hindurchgeht und diesen derart unterteilt, daß der der Austrittsöffnung 22 abgekehrte Teilabschnitt Vvs2 des gestörten Abschnittes Vv1/2 Teil des Volumen-Gesamtabschnittes Vp2 und innerhalb desselben Teil des Volumen-Endabschnittes Vc2 und somit eines späteren Abfallstückes 51 ist und der der Austrittsöffnung 22 zugekehrte Teilabschnitt Vve1 des gestörten Abschnittes Vv1/2 Teil des Volumen-Gesamtabschnittes Vp1 und innerhalb desselben Teil des Volumen-Endabschnittes Vb1 ist, aus welchem ein Abfallstück 53 entsteht. Beide Volumen-Teilabschnitte Vvs2 und Vve1 des gestörten Volumenabschnittes Vv1/2 sind kürzer als der jeweilige Volumen-Endabschnitt Vc2 bzw. Vb1, so daß der gestörte Volumen-Abschnitt Vv1/2 sich nicht in den jeweiligen Volumen-Mittelabschnitt Va1 bzw. Va2 erstreckt, aus welchem ein Artikel 57 durch Aufweiten in der Blasform hergestellt wird.

Entsprechendes gilt auch für die anderen Volumen-Gesamtabschnitte Vp (Fig. 8a) und Vpx (Fig. 8b), deren Mittelabschnitte, Teilabschnitte und Unterabschnitte mit entsprechenden Bezugszeichen versehen sind.

Im darauffolgenden Arbeitszyklus wird der Volumen-Gesamtabschnitt Vp1 durch die Austrittsöffnung 22 des Extrusionskopfes 10 ausgestoßen, so daß er am Ende des Entleerungshubes als am Extrusionskopf hängender Volumen-Gesamtabschnitt einen Vorformling 43 bildet und somit die Position des Volumen-Gesamtabschnittes Vp der Fig. 8a einnimmt. Der Volumen-Gesamtabschnitt Vp2 nimmt dann die Position des Volumen-Gesamtabschnittes Vpx in Fig. 8a ein. Die folgenden Erläuterungen werden deshalb unter Bezugnahme auf die beiden Volumen-Gesamtabschnitt Vp und Vpx in Fig. 8a gegeben. Die Ebene 62, in welcher die Austrittsöffnung 22 liegt, stellt die Trennebene zwischen den beiden Volumen-Gesamtabschnitten Vp und Vpx dar. Diese Trennebene 62 ist nicht fiktiv, da, nachdem die Blasform um den Vorformling geschlossen worden ist und ggf. nach dem Aufweiten des Vorformlings 43 in der Blasform der Volumen-Gesamtabschnitt Vp, d.h., der daraus hergestellte Artikel 57 bzw. dessen Abfallteil 53, welches dem Volumenteilabschnitt Vb entspricht, in der Ebene 62 von dem im Extrusionskopf 10 befindlichen Material, also dem Volumenabschnitt Vpx abgetrennt wird.

Die Trennebene 62 läuft analog der Ebene 61 ebenfalls durch den zu beiden Seiten der Austrittsöffnung 22 befindlichen Volumen-Abschnitt Vv gestörten Laminats hindurch, von dem der Volumen-Teilabschnitt Vvsx mit dem Volumen-Gesamtabschnitt Vpx bis zum nächsten Arbeitszyklus noch im Extrusionskopf 10, d. h. in dem der Austrittsöffnung 22 benachbarten Abschnitt des Verbindungskanals 21 bleibt, wohingegen der Volumen-Teilabschnitt Vve Teil des den Vorformling 43 bildenden Volumen-Gesamtabschnittes Vp ist und sich bereits außerhalb des Extrusionskopfes 10 befindet und somit mit dem Vorformling bzw. dem daraus hergestellten Artikel vom Extrusionskopf 10 abgetrennt wird. Beim nächstfolgenden Arbeitszyklus, wenn der Volumen-Gesamtabschnitt Vpx durch die Austrittsöffnung 22 ausgestoßen wird, befindet sich der Volumen-Teilabschnitt Vvsx des Volumen-Abschnittes Vv gestörten Laminats am freien Ende des Vorformlings 43 im Bereich des Volumen-Endabschnittes Vcx, der beim Schließen der Blasform 47 außerhalb des Formnestes 48 bleibt und am aufgeweiteten Artikel 57 das untere Abfallteil 51 bildet. Der Volumen-Teilabschnitt Vvsx nimmt danach somit die Position des Volumen-Teilabschnittes Vvs der Fig. 8a ein.

Auf die vorbeschriebene Weise ist es mit einfachen Mitteln möglich, die gestörten Volumen-Teilabschnitte Vve, Vvs jeweils in den Volumen-Endabschnitten Vb bzw. Vc des Vorformlings Vp zu plazieren, die beim Schließen der Blasform vom Volumen-Mittelabschnitt Va, aus welchem der Artikel 57 hergestellt wird, abgequetscht werden. Somit ist sichergestellt, daß der Volumen-Mittelabschnitt Va und damit der fertige Artikel 57 keine Wandbereiche aufweisen, in denen das Laminat unregelmäßig ausgebildet oder sonstwie gestört ist.

Bei der im Zusammenhang mit den Fig. 8a, 8b beschriebenen Verfahrensweise wird der jeweils gestörte Volumen-Abschnitt Vv des Laminats in der Ebene 62 derart unterteilt, daß seine Volumen-Teilabschnitte Vvs, Vve in zwei Volumen-Endabschnitten Vb, Vc positioniert sind, die an zwei in aufeinanderfolgenden Arbeitszyklen hergestellten Vorformlingen abgequetscht worden sind. Dies hat zur Folge, daß jedes der aus den Endabschnitten Vc, Vb entstehenden Abfallteile 51, 53 nur einen Volumen-Teilabschnitt Vvs bzw. Vve gestörten Laminats aufzunehmen braucht. Die Praxis hat gezeigt, daß die verfahrensbedingt ohnehin erforderliche Länge der Volumen-Endabschnitt Vc und Vb, aus denen die Abfallteile 51, 53 entstehen, im allgemeinen ausreicht, um die Unterabschnitte Vvs und Vve des gesamten gestörten Volumen-Abschnittes Vv aufzunehmen. Es ist ggf. aber auch möglich, die Anordnung so zu treffen, daß der gesamte gestörte Volumen-Abschnitt Vv in nur einem der beiden Abfallteile 51 oder 53 untergebracht wird.

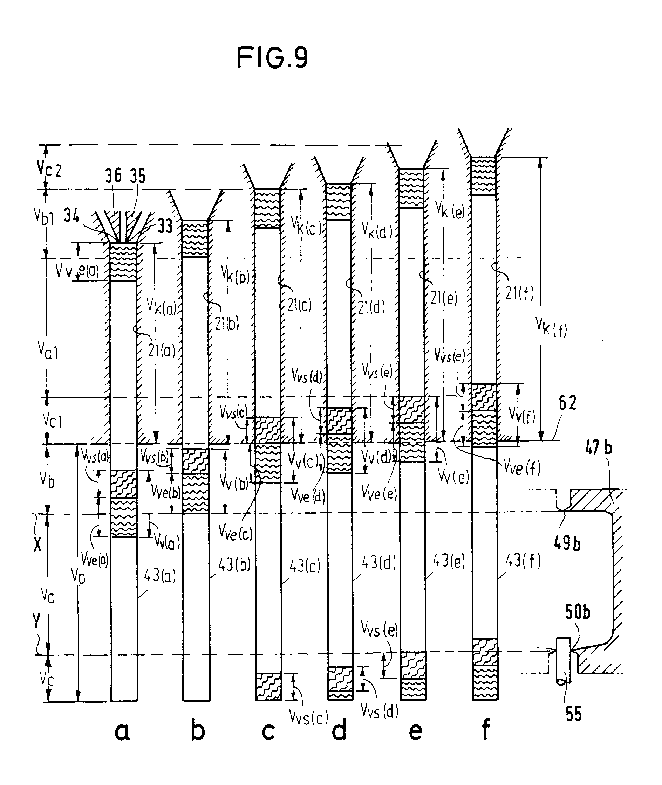

Die bezüglich der Plazierung des gestörten Volumen-Abschnittes Vv zu beachtenden Bedingungen werden im folgenden anhand der Fig. 9 erläutert. Diese zeigt in stark vereinfachter Darstellung den Bereich zwischen Laminatbildungsstelle unterhalb der Kanten 33, 34 und dem unteren Ende des am Extrusionskopf 10 hängenden Vorformlings in sechs Ausführungsformen a bis f, deren Verbindungskanäle 21 unterschiedliche Volumen Vk aufweisen, wobei das Volumen von Kanal und Vorformling jeweils durch deren Länge dargestellt wird. Dabei entspricht die Ausführungsform c der Fig. 9 der Ausführungsform gemäß den Fig. 1 bis 7 dahingehend, daß das Volumen Vk(c) des Verbindungskanals 21(c) gleich dem Volumen des Vorformlings 43(c), also des Volumen-Gesamtabschnittes Vp ist. Folglich sind die gestörten Volumen-Unterabschnitte Vve(c) und Vvs(c) im Vorformling 43(c) so angeordnet, daß sich der Volumen-Teilabschnitt Vvs(c) im Volumen-Endabschnitt Vc befindet, aus welchem das Abfallteil 51 entsteht. Der gestörte Teilabschnitt Vve(c) befindet sich innerhalb des Volumen-Endabschnittes Vb, aus welchem das Abfallteil 53 zwischen Formnest und Extrusionskopf 10 entsteht. Die Ebene 62, innerhalb welcher die Austrittsöffnung 22 des Extrusionskopfes 10 angeordnet ist, verläuft somit analog dem Ausführungsbeispiel gemäß den Fig. 1 bis 7 zwischen dem Volumen-Teilabschnitt Vve(c) gestörten Materials des am Extrusionskopf 10 hängenden Vorformlings 43(c) und dem Volumenunterabschnitt Vvs(c) des im Verbindungskanal 21 befindlichen Volumen-Gesamtabschnittes für den nächstfolgenden Vorformling. Die neben den Darstellungen a bis f angedeutete Blasformhälfte 47b zeigt, daß bei dieser Positionierung der Bereiche gestörten Laminats die Ebenen x und y, in welcher die Endabschnitte Vb und Vc jeweils von dem mittleren Teilabschnitt Va, aus welchem der Artikel hergestellt wird, abgetrennt werden, einen Abstand von den in beiden Endabschnitten Vb und Vc befindlichen Teilabschnitten Vvs(c) und Vve(c) gestörten Laminats aufweisen, so daß selbst dann, wenn aus irgendwelchen nicht vorhersehbaren Einflüssen die Teilabschnitte gestörten Laminats eine etwas größere axiale Erstreckung aufwiesen, sie immer noch innerhalb der Endabschnitten Vb bzw. Vc blieben, die Überschußmaterial, also Abfall darstellen.

Bei der Ausführungsform b der Fig. 9 ist das Volumen Vk(b) des Verbindungskanals 21(b) kleiner als bei der Ausführungsform c. Das Volumen Vk(b) genügt jedoch noch der Bedingung Vk $\geq$ Vp - Vb + Vve, welche das zulässige Mindestvolumen Vk des Verbindungskanals 21 definiert. Die Darstellung b in Fig. 9 zeigt, daß unter dieser Bedingung die den gesamten Volumen-Abschnitt Vv(b) gestörten Laminats bildende Volumen-Teilabschnitte Vvs(b) und Vve(b) in einem Volumen-Endabschnitt des Vorformlings 43(b), nämlich dem Volumen-Endabschnitt Vb positioniert sind, aus welchem das zwischen Blasformnest und Extrusionskopf 10 befindliche Abfallstück 53 entsteht. Auch die Positionierung des gesamten Volumen-Abschnittes Vv(b) gestörten Laminats innerhalb des Endabschnittes Vb zeigt, daß es sich um eine Grenzbedingung handelt, da die Grenze zwischen dem gesamten Volumen-Abschnitt Vv(b) bzw. dessen Volumen-Teilabschnittes Vve(b) einerseits und dem Volumen-Mittelabschnitt Va, aus welchem der Artikel hergestellt wird, mit der Ebene x zusammenfällt, in welcher die Abquetschkanten 49a, 49b der Blasform 47 den Endabschnitt Vb unter Bildung des Abfallteiles 53 vom mittleren Abschnitte Va abquetschen. Das gegenüber der Ausführungsform c kleinere Volumen des Verbindungskanals 21 (b) hat zur Folge, daß ein Teil des während des - bei allen Ausführungsformen a - f gleichen - Entleerungshubes im Verbindungskanal gebildeten Laminats über die Ebene 62 hinaus in den bei demselben Entleerungshub gebildeten Vorformling 43(b) vorbewegt wird.

Dies ist bei der Ausführungsform a der Fig. 9 in noch stärkerem Maße der Fall, da Vk(a) kleiner ist als das Mindestvolumen Vp - Vb + Vve, so daß die vorgenannte Grenzbedingung bezüglich des Mindestvolumens des Verbindungskanals 21 nicht mehr erfüllt ist. Dies hat zur Folge, daß der Volumen-Abschnitt Vv(a) gestörten Laminats mit einem Teil seines Volumen-Teilabschnittes Vve(a) sich in den Abschnitt Va hinein erstreckt, aus welchem der Artikel geformt wird.

Bei der Ausführungsform d der Fig. 9 ist das Volumen Vk(d) des Verbindungskanals 21 größer als Vp, jedoch kleiner als das zulässige Maximalvolumen Vp + Vc - Vvs. Hier ist der gesamte Volumenabschnitt Vv(d) gestörten Laminats auf beide Endabschnitte Vb und Vc verteilt, jedoch derart, daß im Volumen-Endabschnitt Vc nicht nur der Teilabschnitt Vvs(d) gestörten Laminats, sondern auch ein Teil des Teilabschnittes Vve(d) sich befindet. Demzufolge nimmt der Volumen-Endabschnitt Vb nur einen Teil des Volumen-Teilabschnittes Vve(d) gestörten Laminats auf, so daß die Trennebene 62 durch den Teilabschnitt Vve(d) hindurchgeht. Auch hier ergibt sich eine Anordnung, bei welchem die Anteile des Volumen-Abschnitts Vv(d) gestörten Laminats jeweils in einem Abstand von den Ebenen x und y in den Endabschnitten Vb bzw. Vc positioniert sind. Das gegenüber der Ausführungsform c größere Volumen des Verbindungskanals Vk(d) hat somit zur Folge, daß das während eines Entleerungshubes im Verbindungskanal gebildete Laminat diesen nicht völlig ausfüllt. Vielmehr bleibt am Ende des Entleerungshubes ein kurzer Abschnitt des im vorangegangenen Arbeitszyklus gebildeten Volumen-Gesamtabschnittes im Verbindungskanal Vk(d) , wobei die Ebene 62 durch den am Ende des vorangegangenen Arbeitszyklus' gebildeten Volumen-Teilabschnitt Vve(d) verläuft.

Der Verbindungskanal Vk(e) der Ausführungsform e der Fig. 9 weist ein noch größeres Volumen auf als der Verbindungskanal Vk(d), da das Volumen Vk(e) gleich Vp + Vc - Vvs ist. Es entspricht somit der maximal zulässigen Größe für Vk mit der Folge, daß der Endabschnitt Vc des Vorformlings 43(e) vollständig aus gestörtem Laminat besteht und die Grenze zwischen diesem gestörten Laminat im Endabschnitt Vc und dem Volumen-Mittelabschnitt Va, aus dem der Artikel herzustellen ist, in der Ebene y liegt, in welcher der Endabschnitt Vc unter Bildung des Abfallstückes 51 durch die Abquetschkanten 50a, 50b vom Mittelabschnitt Va abgequetscht wird. Im Endabschnitt Vb des Vorformlings 43(e) ist lediglich ein Teil des Volumen-Teilabschnittes Vve(e) gestörten Laminats positioniert, der sich im Abstand von der Ebene x befindet, die den Mittelabschnitt Va vom Endabschnitt Vb trennt.

Die Ausführungsform f der Fig. 9 läßt erkennen, daß bei Überschreiten des zulässigen Maximalvolumens Vp + Vc - Vvs für Vk(f) ein Teilbereich des gestörten Laminats über den unteren Endabschnitt Vc in den Mittelabschnitt Va hineinragt.

Die Ausführungsformen d bis f der Fig. 9 zeigen, daß mit zunehmendem Volumen Vk des Verbindungskanals 21 der Anteil des gestörten Volumenabschnittes Vv, der sich im Volumen-Teilabschnitt Vc an dem der Austrittsöffnung 22 abgekehrten Ende des Vorformlings befindet, größer wird. Die Ausführungsformen a und b zeigen, daß mit abnehmendem Volumen Vk des Verbindungskanals 21 der Anteil des Volumen-Abschnittes Vv gestörten Volumens, der sich im der Austrittsöffnung zugekehrten Endabschnitt Vb befindet, zunimmt. Dies gilt in beiden Fällen, solange die Position des Volumen-Abschnitts gestörten Laminats nicht über die Ebene y bzw. x in den jeweils zugehörigen Mittelabschnitt Va hineinragt.

Wenn vorstehend davon die Rede ist, daß bei Vk = Vp in der durch die Austrittsöffnung 22 definierten Trennebene 62 der gesamte Volumen-Abschnitt Vv gestörten Laminats derart getrennt wird, daß der eine Volumen-Teilabschnitt Vve Bestandteil des am Extrusionskopf 10 hängenden Vorformlings 43 ist, während der andere Volumen-Teilabschnitt Vvs in dem unmittelbar an die Austrittsöffnung anschließenden Bereich des Verbindungskanals 21 bleibt und somit Bestandteil des bis zum nächsten Arbeitszyklus im Verbindungskanal 21 befindlichen Volumen-Gesamtabschnittes Vp1 bzw. Vpx ist, so handelt es sich hierbei um eine ggf. etwas idealisierte Beschreibung des Sachverhaltes, da aufgrund der thermoplastischen Beschaffenheit des die einzelnen Gesamt-Abschnitte bildenden Materials gewisse Dimensionsänderungen desselben insbesondere im Bereich der Austrittsöffnung 22 z. B. aufgrund des Quellverhaltens des Kunststoffes unvermeidbar sind, die dazu führen können, daß sich die relative Lage der einzelnen Abschnitte zur Austrittsöffnung 22 und damit zur Trennebene 62 etwas ändert. Entsprechendes gilt natürlich auch für die Lage des am Extrusionskopf 10 hängenden Vorformlings relativ zur Blasform 47, und zu den Abquetschkanten derselben. Diese Änderungen sind jedoch bei normalen Betriebsbedingungen so gering, daß sie praktisch nicht ins Gewicht fallen. Dies gilt auch für die Position der Volumen-Teilabschnitte gestörten Laminats relativ zur Blasform 47, zumal, wie insbesondere die in Fig. 9 dargestellten Ausführungsformen erkennen lassen, die Endabschnitte Vb und Vc, aus denen die Abfallteile 53 und 51 entstehen, normalerweise ein Volumen und damit eine axiale Erstreckung aufweisen, die es ohne weiteres ermöglichen, die Volumen-Teilabschnitte gestörten Laminats in den Volumen-Endabschnitten Vb und Vc jeweils so zu plazieren, daß sie einen Abstand von der jeweils benachbarten Ebene x bzw. y aufweisen, der auch bei einer geringfügigen axialen Verschiebung des Vorformlings zur Blasform eine Gewähr dafür gibt, daß die Volumen-Teilabschnitte gestörten Laminates außerhalb des Volumen-Mittelabschnittes Va bleiben, aus denen das Endprodukt hergestellt wird.

In den Figuren 10 und 11 der Zeichnung ist ein Ausschnitt aus einem Extrusionskopf dargestellt, der zur Herstellung von Vorformlingen mit einer fünfschichtigen Wandung dient. In beiden Zeichnungen sind Teile, die mit denen des Ausführungsbeispiels gemäß den Figuren 1 bis 7 übereinstimmen, mit gleichen, jedoch um jeweils 100 höheren Bezugszeichen versehen.

Entsprechend der Anzahl der Schichten im herzustellenden Laminat 138 ist der Extrusionskopf 110 des Ausführungsbeispiels gemäß den Figuren 10 und 11 mit fünf Kanälen 117, 166, 118, 167 und 119 versehen, die analog den Kanälen des Ausführungsbeispiels gemäß den Figuren 1 bis 7 ringförmig ausgebildet und zueinander koaxial angeordnet sind. Die den Kanälen 117, 166, 118, 167, 119 zugeordneten, in den Figuren 10 und 11 nicht dargestellten Speicherräume mit den zugeordneten Kolben befinden sich oberhalb des Bereiches des Extrusionskopfes 110, der in der Zeichnung dargestellt ist.

Die Kanäle 117, 166, 118, 167, 119 münden in einen Verbindungskanal 121, der vom Laminat 138 in Richtung auf die in der Mehrzahl der Fälle unten befindliche Austrittsöffnung des Extrusionskopfes 110 durchströmt wird. Entsprechend dem Vorhandensein von fünf Kanälen sind vier die einzelnen Kanäle begrenzende Trennwände 135, 168, 169, 136 vorgesehen. Die unteren Enden der beiden mittleren Trennwände 168, 169, die von umlaufenden Kanten 170, 171 gebildet werden, liegen in einer gemeinsamen, senkrecht zur Längsachse des Extrusionskopfes, also normalerweise horizontal verlaufenden Ebene. Die unteren Enden der beiden äußeren Trennwände 135, 136 sind ebenfalls als Kanten 133, 134 ausgebildet. Sie verlaufen in einer gemeinsamen, zur Ebene der umlaufenden Kanten 170, 171 parallelen Ebene. Jedoch sind die umlaufenden Kanten 133, 134 der beiden äußeren Trennwände 135, 136 gegenüber den Kanten 170, 171 der äußeren Trennwände 135, 136 in Richtung auf die Austrittsöffnung etwas versetzt angeordnet, so daß zwei Laminatsbildungsbereiche entstehen. Im ersten Laminatsbildungsbereich werden die in den Kanälen 166, 118, 167 fließenden Materialströme nach Passieren der umlaufenden Kanten 170, 171 zu einem Zwischenlaminat 172 vereinigt. Nach Passieren der umlaufenden Kanten 133, 134 erfolgt die Vereinigung des Zwischenlaminats 172 mit den aus den Kanälen 117, 119 kommenden Materialströmen zum endgültigen Laminat 138.

In Fig. 11 ist der Betriebszustand dargestellt, der jenem gemäß Fig. 7 entspricht. Da zwei Laminatsbildungsstellen vorhanden sind, erstreckt sich der Volumen-Teilabschnitt Vvc gestörten Laminats durch das Zwischenlaminat 172 und in den an die umlaufenden Kanten 133, 134 der äußeren Trennwände 135, 136 anschließenden Bereich des aus fünf Schichten bestehenden Laminats 138. Der Volumen-Teilabschnitt Vvc gestörten Laminats kann in der beschriebenen Weise ebenfalls in den Abfallstücken der herzustellenden Artikel untergebracht werden. Auch hier gilt, daß es möglich ist, den Volumen-Abschnitt gestörten Laminates ggf. derart zu unterteilen, daß er in der beschriebenen Weise in die Abfallstücke zweier in zwei aufeinanderfolgenden Arbeitszyklen hergestellter Artikel gelangt.

Es ist abweichend von der in den Fig. 10 und 11 dargestellten Anordnung auch möglich, sämtliche Begrenzungskanten der Trennwände in einer Ebene anzuordnen. Die gewählte Anordnung wird im wesentlichen abhängen von der konstruktiven Gestaltung des Kopfes, dem zur Verfügung stehenden Raum und der maximalen Länge des gestörten Volumen-Abschnitts. In jedem Fall wird anzustreben sein, den Volumen-Abschnitt gestörten Laminates so kurz zu machen, daß er in den Abfallteilen untergebracht werden kann, ohne daß diese länger sind als aus verfahrensbedingten Gründen ohnehin erforderlich ist.

Selbstverständlich ist die Erfindung auch anwendbar auf die Herstellung von Artikeln, deren Wandung eine Anzahl von Schichten aufweist, die nicht drei oder fünf beträgt.

Beim Ausführungsbeispiel gemäß den Figuren 1 - 7, welches die Herstellung von Artikeln mit einer aus drei Schichten bestehenden Wandung betrifft, sind drei Extruder vorgesehen, so daß jeder Schicht des Laminats ein Extruder zugeordnet ist. Demzufolge sind beim Ausführungsbeispiel gemäß den Figuren 10 und 11 fünf Extruder vorzusehen, falls jede Schicht des Laminats aus einem besonderen Extruder kommt. ES ist möglich, wenngleich nicht erforderlich, z. B. für die beiden Schichten 139, 141 einerseits und die beiden Schichten 174, 175 andererseits jeweils nur einen Extruder vorzusehen, der somit jeweils das Material für zwei Schichten liefert, wenn die beiden Schichtpaare jeweils aus gleichem Material bestehen. In entsprechender Weise ist es auch möglich, für die Bildung der beiden äußeren Schichten 39, 41 des Laminats 38 beim Ausführungsbeispiel gemäß den Fig. 1 und 7 nur einen Extruder vorzusehen, so daß in diesem Falle nur zwei Extruder erforderlich wären.

Da eine Extrusionseinheit im allgemeinen nicht nur für die Herstellung einer einzigen Artikelart verwendet wird, ist es zweckmäßig, den Extrusionskopf so auszubilden, daß der Verbindungskanal an das Volumen eines Vorformlings, der für eine bestimmte Artikelart benötigt wird, angepaßt werden kann. Dies kann z. B. in der Weise geschehen, daß im unteren Bereich des Extrusionskopfes, in welchem sich der Verbindungskanal befindet, ein Ringkolben angeordnet ist, welcher den Verbindungskanal begrenzt und bezüglich seiner Position in Abhängigkeit vom jeweils benötigten Volumen des Verbindungskanal eingestellt wird. Es ist auch möglich, den den Verbindungskanal enthaltenden Bereich des Extrusionskopfes in Ebenen, die senkrecht zur Längsachse des Extrusionskopfes verlaufen, zu unterteilen und die Länge der einzelnen Teilstücke in Abhängigkeit vom jeweils gewünschten Volumen des Verbindungskanals zu wählen. Ferner kann das Kanalvolumen in den austauschbaren Teilstücken zur Einstellung des jeweils gewünschten Volumens des Verbindungskanals unterschiedlich sein.

Die Erfindung ist auch auf solche Verfahren und Vorrichtungen anwendbar, bei denen zunächst im Spritzgießverfahren ein Endabschnitt des Vorformlings hergestellt wird, der dabei seine endgültige Gestalt erhält, worauf dann ein mit diesem vorgeformten Endabschnitt einstückiger Vorformling extrudiert wird, der in einer Blasform aufgeweitet wird, wobei der dem im Spritzgießverfahren hergestellten Endabschnitt abgekehrte Endabschnitt in der üblichen Weise beim Schließen der Blasform abgequetscht wird. Auch hier würden sich beim absatzweisen Herstellen eines mehrschichtigen Vorformlings gestörte Laminatsbereiche einstellen, die uner Verwendung der Lehre gemäß der Erfindung abgequetscht werden und somit im Abfallteil bleiben.

Bei den vorstehend beschriebenen Ausführungsbeispielen wird der Vorformling aus dem Extrusionskopf vertikal nach unten ausgestoßen, so daß das freie Ende des am Extrusionskopf hängenden Vorformlings das untere Ende ist. Abweichend von dieser Verfahrensweise ist es aber auch ohne weiteres möglich, die Erfindung in solchen Fällen anzuwenden, in denen der Vorformling in anderen Richtungen, also beispielsweise nach oben oder in der Horizontalen, ausgestoßen wird. Ein Ausstoßen nach oben ist z. B. ohne weiteres möglich und bekannt, wenn das in Bewegungsrichtung des Vorformlings vordere Ende desselben geführt wird. Als Führungselement können dabei Formteile dienen, in denen beispielsweise der Hals einer aus dem Vorformling herzustellenden Flasche geformt wird.

**Patentansprüche**

1. Verfahren zum Herstellen von Hohlkörpern (57) aus thermoplastischem Kunststoff, deren Wandung aus wenigstens zwei Schichten besteht, mittels Extrusions-Blasformen, bei welchem Verfahren zunächst Vorformlinge (43), die eine entsprechende Anzahl von Schichten aufweisen, absatzweise hergestellt werden unter Verwendung einer Extrusionseinheit, die wenigstens zwei Extruder (12, 13, 14) und einen gemeinsamen Extrusionskopf (10) aufweist, wobei die Extrusionseinheit mit Speicherräumen (26, 27, 28) zum Speichern der in den Extrudern (12, 13, 14) plastifizierten Materialien und mit Mitteln (29, 30, 31) zum Entleeren dieser Speicherräume zur Bildung von Vorformlingen versehen ist und Materialströme, deren Anzahl der Anzahl der Schichten in der Wandung des Hohlkörpers (57) entspricht, im Bereich des Extrusionskopfs (10) derart zusammengeführt werden, daß einander benachbarte Ströme in einem Laminatbildungsbereich miteinander zu einem Laminat (38) für die Wandung des Vorformlings (43) verbunden werden, welches Laminat (38) durch einen Verbindungskanal (21) innerhalb des Extrusionskopfes (10) zu der in einem Abstand vom Laminatbildungsbereich befindlichen Austrittsöffnung (22) vorbewegt wird, und aus der Austrittsöffnung (22) ein Volumenabschnitt (Vp) des Laminats zur Bildung des Vorformlings (43) ausgestoßen wird, der zwei Endabschnitte (Vb, Vc) und einen Mittelabschnitt (Va) aufweist, wobei zumindest ein Teilbereich des Mittelabschnitts (Va) innerhalb des Formnestes (48) einer unterteilten Blasform (47) unter innerem Überdruck aufgeweitet wird und die Endabschnitte (Vb, Vc) des Vorformlings (43) als Überschußmaterial durch einen Abquetschvorgang abgequetscht werden, an welchem Blasformteile (47a, 47b) teilnehmen, und das Überschußmaterial außerhalb des Formnestes (48) verbleibt, dadurch gekennzeichnet, daß das Volumen (Vk) des Verbindungskanals (21) zwischen dem Laminatbildungsbereich und der Austrittsöffnung (22) des Extrusionskopfes (10) so bemessen wird, daß bei einem vorgegebenen Volumen des einen Vorformling (43) bildenden Volumen-Gesamtabschnitts (Vp) zur Herstellung eines Hohlkörpers (57) das Material (Va), aus welchem der Hohlkörper (57) hergestellt wird, nach Bildung des Laminats während der Dauer wenigstens eines Arbeitszyklus' noch im Extrusionskopf (10) verbleibt und ein Abschnitt gestörten Laminats (Vv), der am Ende und/oder am Anfang der Bildung eines Volumen-Gesamtabschnitts (Vp) nahe dem Laminatbildungsbereich entsteht, sich in wenigstens einem der Volumen-Endabschnitte (Vb, Vc) befindet, die von dem den extrudierten Vorformling bildenden Volumen-Gesamtabschnitt (Vp) abgequetscht werden und außerhalb des Formnestes (48) der Blasform (47) bleiben, wenn wenigstens ein Teilbereich des Volumen-Mittelabschnittes (Va) im Formnest der Hohlform aufgeweitet wird.

2.  Verfahren nach Anspruch 1, dadurch gekennzeichnet, daß das Volumen (Vk) des Verbindungskanals (21) zwischen dem Laminatbildungsbereich und der Austrittsöffnung (22)

a) nicht kleiner ist als die Summe des Volumens aus dem Volumen-Mittelabschnitt (Va) und dem in Fließrichtung des Materials vorderen Volumen-Endabschnitt (Vc) und dem Volumenteilabschnitt (Vve) des gestörten Laminats, der am Ende des Ausstoßhubes entsteht, und

b) nicht größer ist als die Summe des Volumens aus dem einen Vorformling (43) bildenden Volumen-Gesamtabschnitt (Vp) und dem in Fließrichtung des Materials hinteren Volumen-Endabschnittes (Vb) abzüglich des Volumen-Teilabschnittes (Vvs) gestörten Laminats, der am Anfang des Ausstoßhubes entsteht, wobei

c) die Summe der Volumen beider Volumen-Teilabschnitte (Vvs, Vve) gestörten Laminats des den Vorformling (43) bildenden Volumen-Gesamtabschnittes (Vp) nicht größer ist als die Summe der Volumen beider Volumen-Endabschnitte (Vb, Vc) des Vorformlings.

3.  Verfahren nach Anspruch 2, dadurch gekennzeichnet, daß das Volumen (Vk) des Verbindungskanals (21) zwischen dem Laminatbildungsbereich und der Austrittsöffnung (22) des Extrusionskopfes (10) so bemessen wird, daß es gleich dem Volumen (Vp) eines Vorformlings (43) ist.

4.  Verfahren nach Anspruch 2 oder 3, dadurch gekennzeichnet, daß das Volumen (Vk) des Verbindungskanals (21) zwischen dem Laminatbildungsbereich und der Austrittsöffnung (22) des Extrusionskopfes (10) so bemessen wird, daß es den Bedingungen gemäß den Merkmalen a) und b) des Anspruches 2 zuzüglich dem Volumen eines Volumen-Gesamtabschnitts (Vp) oder einem ganzzahligen Vielfachen desselben für einen Vorformling (43) entspricht.

5.  Verfahren nach Anspruch 2, dadurch gekennzeichnet, daß der sich aus den Volumen-Teilabschnitten (Vvs) und (Vve) zusammensetzende Volumen-Abschnitt (Vv) gestörten Laminats auf zwei benachbarte Volumen-Endabschnitte (Vc, Vb) zweier aufeinanderfolgend ausgestoßener Vorformlinge (43) verteilt wird, so daß der eine Volumen-Teilabschnitt (Vvs) gestörten Laminats sich im Volumen-Endabschnitt (Vc) an einem Ende eines Vorformlings (43) und der zweite Volumen-Teilabschnitt (Vve) gestörten Laminats sich im Volumen-Endabschnitt (Vb) am entsprechend anderen Ende des im folgenden Arbeitszyklus hergestellten Vorformlings (43) befindet.

**6.** Verfahren nach Anspruch 2, dadurch gekennzeichnet, daß der gesamte Volumen-Abschnitt (Vv) gestörten Laminats sich in nur einem Volumen-Endabschnitt (Vb oder Vc) des Vorformlings (43) befindet.

**7.** Vorrichtung zum Herstellen von Hohlkörpern (57) aus thermoplastischem Kunststoff, deren Wandung aus einem wenigstens zwei Schichten aufweisenden Laminat (38, 138) besteht, durch Extrusions-Blasformen mit einer Extrusionseinheit, die wenigstens zwei Extruder (12, 13, 14) und einen gemeinsamen Extrusionskopf (10, 110) mit einer ringförmigen Austrittsöffnung (22) aufweist, wobei die Extrusionseinheit mit Speicherräumen (26, 27, 28) zum Speichern des in den Extrudern (12, 13, 14) plastifizierten Materials und mit Mitteln (29, 30, 31) zum Ausstoßen dieser gespeicherten Materialien aus den Speicherräumen (26, 27, 28) zur Bildung von Vorformlingen (43) versehen ist und die Vorrichtung wenigstens eine geteilte mit Abquetschkanten (49a, 49b, 50a, 50b) versehene Blasform (47) mit wenigstens einem Formnest (48) aufweist, innerhalb dessen zumindest ein Teilbereich des Mittelabschnitts (Va) des Vorformlings (43) unter innerem Überdruck zum Hohlkörper (57) aufgeweitet wird, wobei an beiden Enden des Mittelabschnitts (Va) jeweils ein Endabschnitt (Vb, Vc) als Überschußmaterial (51, 53) abgequetscht wird und innerhalb des Extrusionskopfes (10) wenigstens ein Laminatbildungsbereich vorhanden ist, in welchem die Materialströme für die einzelnen Schichten (39, 40, 41; 139, 140, 141; 174, 175) der Wandung zur Bildung des Laminates (38; 138) miteinander verbunden werden, und der Laminatbildungsbereich über einen Verbindungskanal (21; 121), durch welchen das Laminat (38; 138) in Richtung auf die Austrittsöffnung (22) fließt, mit letzterer verbunden ist, dadurch gekennzeichnet, daß das Volumen (Vk) des Verbindungskanals (21, 121) zwischen dem Laminatbildungsbereich und der Austrittsöffnung (22) so gewählt ist, daß im Laminat (38, 138) befindliche gestörte Abschnitte (Vv, Vve, Vvs), die im Laminatbildungsbereich am Anfang und/oder am Ende des Ausstoßvorganges entstehen, bei welchem die Speicherräume (26, 27, 28) entleert werden, in wenigstens einem der abzuquetschenden Endabschnitte (Va, Vb) des Vorformlings (43) angeordnet sind.

**8.** Vorrichtung nach Anspruch 7, dadurch gekennzeichnet, daß das Volumen (Vk) des Verbindungskanals (21, 121) zwischen dem Laminatbildungsbereich und der Austrittsöffnung (22) folgenden Bedingungen genügt:

$$Vk \geq x \cdot Vp - Vb + Vve \text{ und}$$
$$Vk \leq x \cdot Vp + Vc - Vvs,$$

wobei x = 1 oder ein ganzzahliges Vielfaches von 1 beträgt,
Vp der den Vorformling (43) bildende Volumen-Gesamtabschnitt,
Vb der in Fließrichtung des Laminats hintere abzuquetschende Volumen-Endabschnitt,
Vc der in Fließrichtung des Laminats vordere abzuquetschende Volumen-Endabschnitt,
Vve der in Fließrichtung des Laminats hintere Volumen-Teilabschnitt gestörten Laminats
Vvs der in Fließrichtung des Laminats vordere Volumen-Teilabschnitt gestörten Laminats

ist und

die zusätzliche Bedingung gilt, daß $Vvs + Vve \leq Vb + Vc$.

**9.** Vorrichtung nach Anspruch 7, dadurch gekennzeichnet, daß das Volumen (Vk) des Verbindungskanals (21; 121) innerhalb eines bestimmten Bereiches stufenlos veränderbar ist.

**10.** Vorrichtung nach Anspruch 9, dadurch gekennzeichnet, daß das Volumen (Vk) des Verbindungskanals (21; 121) mittels eines ringförmigen Verdrängerelementes einstellbar ist.

**11.** Vorrichtung nach Anspruch 7, dadurch gekennzeichnet, daß das Volumen (Vk) des Verbindungskanals durch Auswahl entsprechend bemessener Bauteile des Extrusionskopfes, die den Verbindungskanal abgrenzen, anpaßbar ist.

**Claims**

**1.** A process for the production of hollow bodies (57) from thermoplastic material, the wall of which comprises at least two layers, by means of extrusion blow moulding, wherein firstly preforms (43) which have a corresponding number of layers are produced batch-wise using an extrusion unit having at least two extruders (12, 13, 14) and a common extrusion head (10), wherein the extrusion unit is provided with storage chambers (26, 27, 28) for storage of the materials plasticised in the extruders (12, 13, 14), and means (29, 30, 31) for emptying the storage chambers to form preforms and flows of material, the number of which corresponds to the number of layers in the wall of the hollow body (57) are brought together in the region of the extrusion head (10) in such a way that mutually adjacent flows are joined together in a laminate-formation region to form a laminate (38) for the wall of the preform (43), which laminate (38) is advanced through a communicating duct (21) within the extrusion head (10) to the outlet opening (22) which is at a spacing from the laminate-formation region, and a volume portion (Vp) of the laminate is ejected from the outlet opening (22) for forming the preform (43) which has two end portions (Vb, Vc) and a central portion (Va), wherein at least a part of the central portion (Va) is expanded within the mould cavity (48) of a divided blow moulding mould (47) under an internal increased pressure and the end portions (Vb, Vc) of the preform (43) are squeezed off as excess material by a squeezing-off operation in which parts (47a, 47b) of the blow moulding mould are involved, and the excess material remains outside the mould cavity (48), characterised in that the volume (Vk) of the communicating duct (21) between the laminate-formation region and the outlet opening (22) of the extrusion head (10) is of such a size that, with a predetermined volume of the volume overall portion (Vp) forming a preform (43), for the production of a hollow body (57) the material (Va) from which the hollow body (57) is produced, after formation of the laminate, still remains in the extrusion head (10) for the duration of at least one working cycle, and a portion of disturbed laminate (Vv) which occurs at the end and/or at the beginning of the operation of forming a volume overall portion (Vp) adjacent the laminate-formation region is disposed in at least one of the volume end portions (Vb, Vc) which are squeezed off the volume overall portion (Vp) forming the extruded preform and remain outside the mould cavity (48) of the blow moulding mould (47) when at least a part of the volume central portion (Va) is expanded in the mould cavity of the mould.

2. A process according to claim 1 characterised in that the volume (Vk) of the communicating duct (21) between the laminate-formation region and the outlet opening (22)

    a) is not less than the sum of the volume of the volume central portion (Va) and the volume end portion (Vc) which leads in the direction of flow of the material and the part (Vve) of the disturbed laminate which occurs at the end of the ejection stroke movement, and

    b) is not greater than the sum of the volume of the volume overall portion (Vp) forming a preform (43) and the volume end portion (Vb) which trails in the direction of flow of the material, less the volume part (Vvs) of disturbed laminate which occurs at the beginning of the ejection stroke movement, wherein

    c) the sum of the volumes of both parts (Vvs, Vve) of disturbed laminate of the overall portion (Vp) forming the preform (43) is not greater than the sum of the volumes of both end portions (Vb, Vc) of the preform.

3. A process according to claim 2 characterised in that the volume (Vk) of the communicating duct (21) between the laminate-formation region and the outlet opening (22) of the extrusion head (10) is such that it is equal to the volume (Vp) of a preform (43).

4. A process according to claim 2 or claim 3 characterised in that the volume (Vk) of the communicating duct (21) between the laminate-formation region and the outlet opening (22) of the extrusion head (10) is such that it complies with the conditions in accordance with features a) and b) of claim 2 plus the volume of a volume overall portion (Vp) or an integral multiple thereof for a preform (43).

5. A process according to claim 2 characterised in that the volume portion (Vv) of disturbed laminate which is composed of the parts (Vvs) and (Vve) is distributed to two adjacent volume end portions (Vc, Vb) of two successively ejected preforms (43), so that the one part (Vvs) of disturbed laminate is disposed in the end portion (Vc) at one end of a preform (43) and the second part (Vve) of disturbed laminate is disposed in the end portion (Vb) at the correspondingly other end of the preform (43) produced in the following working cycle.

6. A process according to claim 2 characterised in that the entire portion (Vb) of disturbed laminate is disposed in only one end portion (VS or Vc) of the preform (43).

7. Apparatus for the production of hollow bodies (57) from thermoplastic material, the wall of which comprises a laminate (38, 138) having at least two layers, by extrusion blow moulding, comprising an extrusion unit which has at least two extruders (12, 13, 14) and a common extrusion head (10, 110) with an annular outlet opening (22), wherein the extrusion unit is provided with storage chambers (26, 27, 28) for storage of the material plasticised in the extruders (12, 13, 14), and means (29, 30, 31) for ejection of the stored materials from the storage chambers (26, 27, 28) to form preforms (43), and the apparatus has at least one divided blow moulding mould (47) which is provided with squeezing-off edges (49a, 49b, 50a, 50b), with at least one mould cavity (48) within which at least a part of the central portion (Va) of the preform (43) is expanded under an internal increased pressure to provide the hollow body (57), wherein a respective end portion (Vb, Vc) is squeezed off as excess material (51, 53) at each of the two ends of the central portion (Va) and within the extrusion head (10) there is at least one laminate-formation region in which the flows of material for the individual layers (39, 40, 41; 139, 140, 141; 174, 175) of the wall are joined together to form the laminate (38; 138), and the laminate-formation region is connected to the outlet opening (22) by way of a communicating duct (21; 121) through which the laminate (38; 138) flows towards the outlet opening (22), characterised in that the volume (Vk) of the communicating duct (21, 121) between the laminate-formation region and the outlet opening (22) is so selected that disturbed portions (Vv, Vve, Vvs) which are disposed in the laminate (38, 138) and which occur in the laminate-formation region at the beginning and/or at the end of the ejection operation in which the storage chambers (26, 27, 28) are emptied are arranged in at least one of the end portions (Va, Vb) of the preform (43), which are to be squeezed off.

8.   Apparatus according to claim 7 characterised in that the volume (Vk) of the communicating duct (21, 121) between the laminate-formation region and the outlet opening (22) satisfies the following conditions:

$$Vk \geq x \cdot Vp - Vb + Vve \text{ and}$$
$$Vk \leq x \cdot Vp + Vc - Vvs,$$

wherein

x = 1 or an integral multiple of 1,

Vp is the volume overall portion forming the preform (43),

Vb is the volume end portion which is to be squeezed off and which trails in the direction of flow of the laminate,

Vc is the volume end portion which is to be squeezed off and which leads in the direction of flow of the laminate,

Vve is the volume part of disturbed laminate which trails in the direction of flow of the laminate,

Vvs is the volume part of disturbed laminate which leads in the direction of flow of the laminate,

and the additional condition applies that Vvs + Vve $\leq$ Vb + Vc.

9.   Apparatus according to claim 7 characterised in that the volume (Vk) of the communicating duct (21; 121) is steplessly variable within a given range.

10.   Apparatus according to claim 9 characterised in that the volume (Vk) of the communicating duct (21; 121) is adjustable by means of an annular displacement element.

11.   Apparatus according to claim 7 characterised in that the volume (Vk) of the communicating duct can be adapted by the selection of suitably dimensioned components of the extrusion head, which define the communicating duct.

**Revendications**

1.   Procédé pour réaliser des corps creux (57) en matière thermoplastique ayant une paroi faite d'au moins deux couches, au moyen de moules d'extrusion-soufflage, ce procédé consistant à produire d'abord des ébauches de moulage (43) qui présentent un nombre correspondant de couches, en les débitant de manière intermittente à l'aide d'une unité d'extrusion qui comporte au moins deux extrudeuses (12,13,14) et une tête d'extrusion commune (10), cette unité d'extrusion étant pourvue de chambres d'accumulation (26, 27, 28) pour conserver en attente les matières plastifiées dans les extrudeuses (12, 13, 14) et de moyens pour assurer le vidage de ces chambres d'accumulation afin de produire des ébauches de moulage et de réaliser des courants de matière, en nombre correspondant au nombre des couches de la paroi du corps creux (57), que l'on guide ensemble dans la tête d'extrusion (10) de manière à assurer la réunion des courants adjacents dans une zone de formation de la matière lamifiée (38) pour obtenir cette matière lamifiée destinée à constituer la paroi de l'ébauche de moulage (43), cette matière lamifiée (38) étant poussée pour s'écouler dans un canal de liaison (21) ménagé à l'intérieur de la tête d'extrusion (10) et aboutissant à un orifice de sortie (22) disposé à une certaine distance de l'endroit où se forme la matière lamifiée, un volume élémentaire (Vp) de matière lamifiée étant ainsi éjecté par l'orifice de sortie (22) pour donner naissance à l'ébauche de soufflage (43) qui comporte deux segments terminaux (Vb, Vc) et une partie principale médiane (Va), au moins une zone partielle de cette partie médiane (Va) subissant ensuite à l'intérieur de la cavité de moulage (48) d'un moule de soufflage (47) en plusieurs parties un traitement d'expansion sous l'effet d'une supression, et les deux segments terminaux (Vb, Vc) de l'ébauche de moulage (43) étant alors sectionnés par écrasement et séparés de celle-ci pour aller au rebut, les parties mobiles (47a, 47b) du moule participant à cette opération d'écrasement, et la matière en excès restant à l'extérieur de la cavité de moulage (48), le procédé étant caractérisé en ce que le volume (Vk) du canal de liaison (21), entre l'endroit où se forme la matière lamifiée et l'orifice de sortie (22) de la tête d'extrusion (10) est calculé pour que, suivant une valeur donnée du volume élémentaire (Vp) de matière nécessaire pour réaliser un corps creux (57), la matière (Va) destinée à donner naissance au corps creux (57) reste encore dans la tête d'extrusion (10) après la formation de la matière lamifiée, pendant la durée d'au moins un cycle de travail, et pour qu'une tranche de la zone de matière lamifiée en désordre, qui apparaît au voisinnage de l'endroit où se forme la matière lamifiée au début et/ou à la fin de la production d'un volume élémentaire (Vp) de matière lamifiée, se trouve placée dans au moins l'un des segments terminaux (Vb, Vc) de l'ébauche qui sont destinés à être sectionnés et séparés de la partie principale de l'ébauche, ces segments terminaux restant en dehors de la cavité de moulage (48) du moule de soufflage (47) pendant qu'au moins une zone partielle de la partie médiane (Va) de l'ébauche subit un traitement d'expansion dans la cavité de moulage du moule creux.

2. Procédé selon la revendication 1, caractérisé en ce que le volume (Vk) du canal de liaison (21), entre l'endroit où se forme la matière lamifiée et l'orifice de sortie (22), répond aux conditions suivantes:

     a) il n'est pas inférieur à la somme des volumes de la partie médiane (Va) de l'ébauche et du segment terminal de celle-ci (Vc) situé vers l'avant dans le sens de l'écoulement de la matière, plus le volume (Vve) de la tranche de matière lamifiée en désordre qui apparaît à la fin de la phase d'éjection;

     b) et il n'est pas supérieur à la somme du volume de matière (Vp) d'une ébauche de moulage (43) et du volume de matière (Vb) du segment terminal postérieur de celle-ci dans le sens de l'écoulement de la matière, déduction faite du volume (Vvs) de la tranche de matière lamifiée en désordre qui apparaît au début de la phase d'éjection;

     c) étant entendu que la somme des volumes des deux tranches (Vvs et Vve) de la matière lamifiée en désordre qui sont comprises dans le volume élémentaire de matière (Vp) de l'ébauche de moulage (43) n'est pas supérieure à la somme des volumes (Vb, Vc) des deux segments terminaux de l'ébauche.

3. Procédé selon la revendication 2, caractérisé en ce que le volume (Vk) du canal de liaison (21), entre l'endroit où se forme la matière lamifiée et l'orifice de sortie (22) de la tête d'extrusion (10) est calculé pour être égal au volume de matière (Vp) d'une ébauche (43).

4. Procédé selon l'une des revendications 2 ou 3, caractérisé en ce que le volume (Vk) du canal de liaison (21), entre l'endroit où se forme la matière lamifiée et l'orifice de sortie (22) de la tête d'extrusion (10) est calculé pour que, dans les conditions a) et b) de la revendication 2, il corresponde au volume total de matière (Vp) servant à réaliser une ébauche de moulage (43) ou à un multiple entier de ce volume total.

5. Procédé selon la revendication 2, caractérisé en ce que le volume (Vv) de la zone de matière lamifiée en désordre, constitué par les deux tranches de volume (Vvs) et (Vve), se trouve divisé et réparti dans deux segments terminaux adjacents (Vc, Vb) de deux ébauches de moulage (43) éjectées à la suite l'une de l'autre, de telle manière que l'une des tranches (Vvs) de matière lamifiée en désordre soit contenue dans le segment terminal (Vc) situé à l'une des extrémités d'une ébauche de moulage (43), et que la deuxième tranche (Vve) de matière lamifiée en désordre soit contenue dans le segment terminal (Vb) situé à l'autre extrémité correspondante de l'ébauche de moulage (43) réalisée au cours du cycle de travail suivant.

6. Procédé selon la revendication 2, caractérisé en ce que le volume total (Vv) de la zone de matière lamifiée en désordre se trouve seulement dans l'un des deux segments terminaux (Vb ou Vc) de l'ébauche de moulage (43).

7. Dispositif pour réaliser des corps creux (43) en matière plastique ayant une paroi en matière lamifiée (38, 138) faite d'au moins deux couches, en opérant par extrusion-soufflage au moyen d'une unité d'extrusion qui comporte au moins deux extrudeuses (12, 13, 14) et une tête d'extrusion commune (10, 110) pourvue d'un orifice d'extrusion de forme annulaire (22), l'unité d'extrusion comportant des chambres d'accumulation (26, 27, 28) pour garder en attente la matière plastifiée dans les extrudeuses (12, 13, 14), et des moyens pour éjecter cette matière hors des chambres d'accumulation (26, 27, 28) pour réaliser des ébauches de moulage (43), le dispositif comportant en outre un moule de soufflage en plusieurs parties (47), muni de lèvres de sectionnement par écrasement (49a, 49b, 50a, 50b) et contenant au moins une cavité de moulage (48), dans laquelle au moins une partie de la zone médiane (Va) de l'ébauche (43) subit un traitement d'expansion sous l'effet d'une surpression interne qui la transforme en un corps creux (57), un segment terminal (Vb, Vc) étant réservé à l'endroit de chacune des deux extrémités de la zone médiane (Va) de l'ébauche, pour être sélectionné et éliminé comme matière en excès (51, 53), au moins un endroit pour la formation de la matière lamifiée étant prévu à l'intérieur de la tête d'extrusion (10), pour assurer la réunion des courants de matière destinés à constituer les différentes couches (39, 40, 41; 139, 140, 141; 174, 175) de la paroi, afin de produire la matière lamifiée (38, 138) en direction de cet orifice, le dispositif étant caractérisé en ce que le volume (Vk) du canal de liaison (21, 121), entre l'endroit où se forme la matière lamifiée et l'orifice de sortie (22), est calculé pour que la zone de matière lamifiée en désordre (Vv, Vve, Vvs) qui apparaît dans cette matière (38, 138) à l'endroit où elle se forme, au début et/ou à la fin de la phase d'éjection, au cours de laquelle se vident les chambres d'accumulation (26, 27, 28), se trouve placée dans au moins l'un des segments terminaux (Vb, Vc) de l'ébauche de moulage (43).

8. Dispositif selon la revendication 7, caractérisé en ce que le volume (Vk) du canal de liaison (21, 121), entre l'endroit où se forme la matière lamifiée et l'orifice de sortie (22), satisfait aux conditions définies par les relations suivantes:

Vk supérieur ou égal à: x . Vp - Vb + Vve, et

Vk inférieur ou égal à: x . Vp + Vc - Vvs, dans lesquelles:

x = 1, ou est un multiple entier de 1,

Vp est la valeur du volume total de matière lamifiée nécessaire pour réaliser l'ébauche de moulage (43),

Vb est la valeur du volume de matière lamifiée du segment terminal postérieur de l'ébauche, dans le sens de l'écoulement, ce segment étant destiné à être sectionné et séparé de l'ébauche,

Vc est la valeur du volume de matière du segment terminal antérieur de l'ébauche, dans le sens de l'écoulement, ce segment étant également destiné à être sectionné et séparé de l'ébauche,

Vve est la valeur du volume de la tranche postérieure de la zone de matière lamifiée en désordre, dans le sens de l'écoulement de cette matière,

Vvs est la valeur du volume de la tranche antérieure de la zone de matière lamifiée en désordre, dans le sens de l'écoulement,

les valeurs Vvs et Vve des volumes de ces deux tranches répondant en outre à la condition définie par la relation suivantes:

Vvs + Vve inférieur ou égal à: Vb + Vc

9. Dispositif selon la revendication 7, caractérisé en ce que la valeur du volume (Vk) du canal de liaison (21; 121) est variable d'une manière continue, à l'intérieur d'une plage déterminée.

10. Dispositif selon la revendication 9, caractérisé en ce qu'on peut faire varier le volume (Vk) du canal de liaison (21; 121), au moyen d'un élément annulaire ayant un certain volume de déplacement.

11. Dispositif selon la revendication 7, caractérisé en ce qu'on peut adapter à différentes valeurs le volume (Vk) du canal de liaison, en choisissant pour constituer la tête d'extrusion des composants de cotes appropriées, conçus à cet effet, et contenant le canal de liaison.

FIG.1

# FIG.2

FIG. 3

FIG. 4

FIG. 5

FIG. 6

FIG. 7

FIG. 8a

FIG. 8 b

# FIG.9

FIG.10

FIG. 11